# EUROPEAN PATENT SPECIFICATION

(11) **EP 3 279 900 B1**
(45) Date of publication and mention of the grant of the patent: **02.06.2021**
(21) Application number: 16772932.6
(22) Date of filing: 30.03.2016
(51) Int. Cl.: G21F 9/06, C02F 1/469, C25C 1/08, C25C 7/04, G21F 9/12, B01D 61/48, C02F 101/20

(54) **METHOD AND DEVICE FOR TREATING METAL ION-CONTAINING LIQUIDS**
VERFAHREN UND VORRICHTUNG ZUR BEHANDLUNG VON METALLIONENHALTIGEN FLÜSSIGKEITEN
PROCÉDÉ ET DISPOSITIF DE TRAITEMENT DE LIQUIDES CONTENANT DES IONS MÉTALLIQUES

(30) Priority: 31.03.2015 JP 2015073041; 31.03.2015 JP 2015073042; 31.03.2015 JP 2015073043; 31.03.2015 JP 2015073044
(43) Date of publication of application: 07.02.2018
(73) Proprietor: Kurita Water Industries Ltd., Tokyo 164-0001 (JP); Hitachi-GE Nuclear Energy, Ltd., Hitachi-shi Ibaraki 317-0073 (JP)
(72) Inventor: MIYAMOTO, Shingo, Tokyo 164-0001 (JP); HIROSE, Mami, Tokyo 164-0001 (JP); IWASAKI, Mamoru, Tokyo 164-0001 (JP); KOMORI, Hideyuki, Tokyo 164-0001 (JP); AIZAWA, Motohiro, Hitachi-shi Ibaraki 317-0073 (JP); OTA, Nobuyuki, Hitachi-shi Ibaraki 317-0073 (JP); SUMIYA, Takako, Hitachi-shi Ibaraki 317-0073 (JP); ISHIDA, Kazushige, Tokyo 100-8280 (JP)
(74) Representative: Hoffmann Eitle
(86) International application number: PCT/JP2016/060328
(87) International publication number: WO 2016/159051

(56) References cited:
- EP-A1- 0 638 664
- WO-A1-2009/124393
- WO-A1-2014/153974
- WO-A1-2015/060250
- JP-A- S 603 593
- JP-A- S 603 593
- JP-A- H0 780 466
- JP-A- S5 784 399
- JP-A- S55 149 652
- JP-A- S63 184 100
- JP-A- 2002 361 245
- JP-A- 2003 004 894
- JP-A- 2004 028 902
- JP-A- 2004 028 902
- JP-A- 2011 516 730
- JP-A- 2015 200 585

## Description

### Technical Field

The invention relates to a method and an apparatus for treating a liquid containing ions of an iron-group metal and specifically to a method and an apparatus for removing ions of iron-group metals such as iron (Fe), cobalt (Co), and nickel (Ni) from a liquid containing the above ions.

### Background Art

A large amount of decontamination liquid waste is produced in nuclear power plants when radioactive substances are chemically removed from surfaces of the metal members constituting devices or pipes included in a primary cooling system used in a nuclear power plant or systems including them which are contaminated with the radioactive substance. The decontamination liquid waste contains ions of metals such as Fe, Co, and Ni and radioactive substances such as Co-60 (cobalt-60) and Ni-63 (nickel-63) in large amounts. The decontamination liquid waste is reused as a decontamination liquid after ion components dissolved in the decontamination liquid waste have been removed with an ion-exchange resin. Consequently, waste ion-exchange resins containing a large amount of radioactive substances are produced.

In nuclear power plants and the like, ion-exchange resins used for cleaning a cooling water system that comes into direct contact with a fuel rod and contains radioactive substances, such as a reactor water clean-up system (CUW) or a fuel pool cooling and clean-up system (FPC), the ion-exchange resins containing a large amount of radioactive substances adsorbed thereon, are stored in resin tanks installed in the power plants as high-dose-rate waste substances.

The waste substances containing radioactive substances are finally mixed with a solidification aid, such as cement, to be stabilized and subsequently disposed of by burial. The costs of the disposal of the waste substances by burial vary with the content of the radioactive substance; the higher the concentration of the radioactive substance, the higher the disposal costs. Therefore, it is economical to minimize the volume of the high-dose-rate waste substances before being disposed of by burial in a solid form.

If waste ion-exchange resins can be disposed of by incineration, the volume of the radioactive waste substances can be reduced markedly. However, in such a case, the radioactive substances may be disadvantageously concentrated in incineration ash, and the dose rate of the incineration ash is increased. If the radioactive substances can be completely removed from waste ion-exchange resins, the increase in the dose rate of the incineration ash can be prevented and it may become possible to reduce the volume of radioactive waste substances by incineration.

In order to reduce the volume of radioactive waste substances, it is desirable to separate radioactive substance from waste ion-exchange resins in the form of solid substances and encapsulate the radioactive substance in a shielded container. A waste ion-exchange resin from which the radioactive substances have been removed is a low-dose-rate waste substance that can be disposed of at a low cost. Removing the radioactive substances to a level at which the waste ion-exchange resin can be disposed of by incineration enables the volume of the radioactive substances to be markedly reduced by incineration.

Examples of a method for treating a high-dose-rate waste resin include the methods described in PTL 1 and PTL 2, in which a waste resin is decomposed by a wet oxidation process such as a Fenton method or supercritical water oxidation. In the above methods, a large amount of high-dose-rate liquid waste is produced. The final disposal of a high-dose-rate liquid waste requires condensing the liquid waste by evaporation and stabilizing the resulting condensate into a solid form by, for example, mixing the condensate with cement. In the above case, since a solidification aid, such as cement, is additionally used, the volume of the high-dose-rate waste substances that are to be finally disposed of is increased accordingly and the reduction in the volume of waste substances is not achieved.

PTL 3 discloses a technique in which sulfuric acid is passed through a waste resin in order to elute ionic radioactive substances from the waste resin, the eluent is then subjected to diffusion dialysis in order to separate the radioactive substances from the eluent, and the resulting sulfuric acid is reused. PTL 4 discloses a method for treating a waste resin, in which a waste resin is immersed in an aqueous oxalic acid solution in order to dissolve, in the aqueous oxalic acid solution, metal crud particles deposited on the surface of the waste resin and elute metal ions adsorbed on the resin into the aqueous oxalic acid solution. Also in the above methods, a liquid waste containing radioactive substances is produced.

PTL 5 discloses a method for removing radioactive substances from a liquid waste containing ionic radioactive substances. The technique disclosed in PTL 5 is a technique for regenerating and reusing a decontamination solution in which a decontamination solution containing radioactive cations dissolved therein is passed through an electrodeposition cell while a voltage is applied across the electrodeposition cell in order to cause the radioactive cations to be deposited on a cathode in the form of radioactive metal particles. It is described that a cathode liquid is poured on the entirety of the cathode on which the radioactive metal particles are deposited in order to desorb the radioactive metal particles from the cathode.

In PTL 5, a decontamination solution containing radioactive cations dissolved therein is directly passed through a cathode-side chamber of an electrodeposition cell while a voltage is applied across the electrodeposition cell in order to cause the radioactive cations to be deposited on the cathode in the form of radioactive metal particles. In this method, the properties of the cathode liquid vary with those of the decontamination solution and cannot be adjusted to the liquid properties appropriate for electrodeposition. In the case where the decontamination solution is an acidic liquid waste, radioactive metal components precipitated on the surface of the cathode may become redissolved in the acidic liquid waste and, consequently, the precipitation of the radioactive metal components may fail to occur. In another case, the precipitation rate may be significantly reduced. In the case where the liquid waste is neutral or alkaline, hydroxide precipitates may be formed in the vicinity of the surface of the cathode, which makes it difficult to remove the radioactive metal by causing the radioactive metal to be electrodeposited on the surface of the cathode. In order to efficiently remove radioactive substances from a liquid waste by electrodeposition, it is not preferable to introduce a liquid waste directly to a cathode chamber and it is important to adjust the properties of the cathode liquid to be appropriate for electrodeposition.

PTL 6 proposes a method in which an anode chamber provided with an anode is separated from a cathode chamber provided with a cathode with a cation-exchange membrane, an acidic liquid containing metal ions is introduced to the anode chamber, a cathode liquid is introduced to the cathode chamber, and a voltage is applied between the anode and the cathode in order to cause the metal ions contained in the liquid contained in the anode chamber to permeate through the cation-exchange membrane and migrate into the cathode chamber and the metal to precipitate on the cathode.

In PTL 6, the anode chamber to which the acidic liquid containing metal ions is introduced and the cathode chamber in which the metal is precipitated are separated from each other with a cation-exchange membrane. This enables efficient electrodeposition of the metal regardless of the properties of the acidic liquid containing metal ions. In the case where the acidic liquid containing metal ions is an acidic liquid waste, the metal electrodeposited on the cathode may disadvantageously become dissolved in the acidic liquid waste or the rate of electrodeposition of the metal may be significantly reduced in the method of the related art, such as PTL 5. In contrast, in PTL 6, the condition of the cathode chamber can be adjusted to be appropriate for electrodeposition even when an acidic liquid waste is introduced to the anode chamber.
WO 2009/124393 describes an electrochemical process for the recovery of metallic iron or iron-rich alloy, oxygen and sulfuric acid from an iron-rich metal sulfate solution wherein an electrolysis in an electrolyzer is performed which comprises a cathodic compartment equipped with a cathode having a hydrogen overpotential equal or higher than that of iron and containing a catholyte having a pH below about 6.0; and anodic compartment equipped with an anode and containing an anolyte, and a separator allowing for anion passage. The electrodeposited iron or iron-rich alloy, sulfuric acid and oxygen gas are recovered wherein the electrolysis leads to the electrodeposition of iron or the iron-rich alloy at the cathode, and nascent oxygen gas is evolved at the anode, and sulfuric acid is accumulated in the anodic compartment.
EP 0638664 describes a process for regeneration of metal ion and sulfuric acid-containing aqueous solution wherein the metal ions are deposited on the surface of the cathode and oxygen and protons are formed at the anode.
JP S60-3593 describes a method for electrolytically decontaminating a radioactive metal waste whose surface is contaminated with a radioactive substance. Radioactive metal ions are electrolytically decomposed from an electrolyte contaminated with said radioactive metal ions, the pH of the electrolytic solution is adjusted and then metal ions containing the radioactive metal ions are precipitated on the cathode surface and metal ions are removed.
JP 2004-028902 describes an energy consumption device provided with an elution tank which makes sulfuric acid solution for eluting pass through an ion exchange resin in which at least a radioactive ion species is adsorbed which is eluted in the sulfuric acid solution. The device also contains a neutralizing tank which generates neutralizing liquid containing sodium sulfate as a neutralizing agent, an evaporater which concentrates the neutralizing liquid and generates the concentrated waste liquid, and a three-chamber bipolar membrane electrolyzer which generates sulfuric acid and sodium hydroxide from the concentrated waste liquid by using an electric dialysis method and reduces the amount of sodium sulfate contained in the concentrated waste liquid by removing the sulfuric acid and the sodium hydroxide generated from said waste liquid.
US 2015/0336815 describes a method of treatment radioactive waste water wherein the radioactive waste water undergoes reverse osmosis treatment and continues electrodeionization treatment in sequence. The continuous electrodeionization treatment is carried out in a continuous electrodeionization unit comprising a continuous electrodeionization membrane stack comprising a dilute chamber and a concentrate chamber. The dilute chamber is filled with a specified amount of a first strong acid cation exchange resin, a specified amount of a first strong base anion exchange resin and a specified amount of an optional weak base anion exchange resin. The concentrate chamber is filled with a second strong acid cation exchange resin and the rest is a second strong base anion exchange resin.
PTL 1: JP S61-9599 B
PTL 2: JP 3657747 B
PTL 3: JP 2004-28697 A
PTL 4: JP 2013-44588 A
PTL 5: JP 4438988 B
PTL 6: JP 2015-81381 A

1) In the method disclosed in PTL 6, the pH of the cathode liquid may be reduced by an acid contained in the acidic liquid waste contained in the anode chamber permeating through the cation-exchange membrane and migrating into the cathode chamber as a result of concentration diffusion, while the amount of the reduction in the pH of the cathode liquid varies depending on the type of the cation-exchange membrane and the current density. Consequently, the electrodeposition of the metal on the cathode may fail to occur. In another case, the rate of electrodeposition of the metal may be reduced disadvantageously.
   This is presumably because the reduction in the pH of the cathode liquid increases the rate at which the metal electrodeposited on the cathode becomes redissolved in the cathode liquid.
2) In the method disclosed in PTL 6, the rate at which ions of an iron-group metal permeate through the cation-exchange membrane when they are caused to migrate from the liquid waste (anode liquid) into the cathode liquid is low, while the rate of electrodeposition of the iron-group metal in the cathode liquid is relatively high. Therefore, the permeation of the iron-group metal ions through the cation-exchange membrane is the step that determines the treatment rate.
3) In the case where metal ions contained in the acidic liquid waste are removed by electrodeposition in accordance with the method disclosed in PTL 6, the acid group anions contained in the acidic liquid waste may disadvantageously migrate into the electrodeposition liquid through the cation-exchange membrane while the metal ions contained in the acidic liquid waste are caused to migrate into the electrodeposition liquid through the cation-exchange membrane.
   The term "acid group", which is also referred to as "acid residue", refers to an atom or an atomic group after removal of one or more hydrogen atoms capable of ionizing into hydrogen ions from a molecule of an inorganic or organic acid. Examples of an acid group include Cl in hydrochloric acid and SO₄ and HSO₄ in sulfuric acid. The term "acid group anion" refers to an anion of the atom or the atomic group after removal of one or more hydrogen atoms capable of ionizing into hydrogen ions from a molecule of an inorganic or organic acid. Examples of an acid group anion include Cl⁻ in hydrochloric acid and SO₄²⁻ and HSO₄⁻ in sulfuric acid.
   If the acid group anions contained in the acidic liquid waste migrate into electrodeposition liquid, the acid concentration in the acidic liquid waste is disadvantageously reduced and, concequently, it becomes not possible to effectively reuse the acidic liquid waste from which the metal ions have been removed as an acidic liquid. Furthermore, the pH of the electrodeposition liquid may be reduced. This increases the likelihood of electrodeposition failure occurring when the metal ions are removed from the electrodeposition liquid by electrodeposition.
4) High-dose-rate waste resins used in reactor water clean-up systems and fuel pool cooling and clean-up systems contain ions of radioactive substances adsorbed thereon and crud particles composed primarily of an iron oxide. Since the crud particles also contain radioactive substances, it is necesssary to remove the crud particles from the waste resin simultaneously in order to completely remove radioactive substances from the waste resin. The chemical forms of the crud particles contained in the waste resin are primarily magnetite (Fe₃O₄) and hematite (α-Fe₂O₃).

In the case where the method in which sulfuric acid that has not been heated, that is, has normal temperature, is passed through the waste resin as in PTL 3 is used, it is difficult to dissolve poorly-soluble hematite (α-Fe₂O₃). Consequently, in such a case, the crud particles fail to be removed from the waste resin, and the radioactive substances remain in the waste resin disadvantageously.

In PTL 4, it is described that the metal ions adsorbed on the waste resin are eluted into an aqueous oxalic acid solution having a predetermined concentration or more and dissolved in the aqueous oxalic acid solution. However, it is not possible to remove the metal ions adsorbed on the waste resin to an equilibrium concentration or less by the above immersion treatment only.

### Summary of Invention

The summary of the invention is as follows.
[1] A method for treating a liquid containing ions of an iron-group metal, the method comprising: an electrodialysis step in which a liquid containing ions of an iron-group metal and an electrodeposition liquid containing a ligand capable of forming a complex with the ions of an iron-group metal are introduced to an electrodialysis bath including a plurality of cation-exchange membranes, and the ions of an iron-group metal are removed from the liquid containing ions of an iron-group metal as a result of the ions of an iron-group metal contained in the liquid containing ions of an iron-group metal being permeated through the cation-exchange membrane and migrated into the electrodeposition liquid;
   an electrodeposition step in which an electrodeposition liquid containing the ions of an iron-group metal, the electrodeposition liquid being discharged from the electrodialysis bath, is introduced to an electrodeposition bath including an anode and a cathode, and the ions of an iron-group metal are removed from the electrodeposition liquid as a result of the ions of an iron-group metal contained in the electrodeposition liquid being electrodeposited on the cathode; and
   an electrodeposition-liquid-circulation step in which an electrodeposition liquid from which the ions of an iron-group metal have been removed in the electrodeposition step is fed to the electrodialysis step.
[2] The method for treating a liquid containing ions of an iron-group metal according to [1], wherein the liquid containing ions of an iron-group metal is an acidic decontamination liquid waste having a pH of less than 5 which is produced by a decontamination treatment performed in a nuclear power plant, and wherein the liquid waste from which the ions of an iron-group metal have been removed in the electrodialysis step is reused as a decontamination liquid.
[3] The method for treating a liquid containing ions of an iron-group metal according to [1] or [2], wherein the electrodialysis bath includes
   an anode and a cathode,
   a first bipolar membrane arranged to face the anode,
   a second bipolar membrane arranged to face the cathode,
   a plurality of cation-exchange membranes interposed between the first and second bipolar membranes, and
   one or more third bipolar membranes each interposed between a specific one of adjacent pairs of the cation-exchange membranes,
   wherein a space between the anode and the first bipolar membrane serves as an anode chamber, and a space between the cathode and the second bipolar membrane serves as a cathode chamber,
   wherein a space between each of the cation-exchange membranes and a specific one of the bipolar membranes which is adjacent to the cation-exchange membrane on a side of the cation-exchange membrane on which the anode is located serves as a deionization chamber, and a space between each of the cation-exchange membranes and a specific one of the bipolar membranes which is adjacent to the cation-exchange membrane on a side of the cation-exchange membrane on which the cathode is located serves as a concentration chamber, and
   wherein the liquid containing ions of an iron-group metal is passed through the deionization chamber, while the electrodeposition liquid is passed through the concentration chamber.
[4] The method for treating a liquid containing ions of an iron-group metal according to [1] or [2], wherein the electrodialysis bath includes
   an anode and a cathode,
   a first hydrogen-permselective cation-exchange membrane arranged to face the anode,
   a second hydrogen-permselective cation-exchange membrane arranged to face the cathode,
   a plurality of cation-exchange membranes interposed between the first and second hydrogen-permselective cation-exchange membranes, and
   one or more third hydrogen-permselective cation-exchange membranes each interposed between a specific one of adjacent pairs of the cation-exchange membranes,
   wherein a space between the anode and the first hydrogen-permselective cation-exchange membrane serves as an anode chamber and a space between the cathode and the second hydrogen-permselective cation-exchange membrane serves as a cathode chamber,
   wherein a space between each of the cation-exchange membranes and a specific one of the hydrogen-permselective cation-exchange membranes which is adjacent to the cation-exchange membrane on a side of the cation-exchange membrane on which the anode is located serves as a deionization chamber, and a space between each of the cation-exchange membranes and a specific one of the hydrogen-permselective cation-exchange membranes which is adjacent to the cation-exchange membrane on a side of the cation-exchange membrane on which the cathode is located serves as a concentration chamber, and
   wherein the liquid containing ions of an iron-group metal is passed through the deionization chamber, while the electrodeposition liquid is passed through the concentration chamber.
[5] The method for treating a liquid containing ions of an iron-group metal according to any one of [1] to [4], wherein the electrodeposition bath includes
   an anode chamber provided with the anode, a cathode chamber provided with the cathode, and a cation-exchange membrane that separates the anode chamber from the cathode chamber, and wherein an electrodeposition liquid containing the ions of an iron-group metal is passed through the cathode chamber.
[6] The method for treating a liquid containing ions of an iron-group metal according to [5], wherein an electrodeposition liquid discharged from the cathode chamber of the electrodeposition bath is introduced to the electrodialysis bath via an electrodeposition liquid tank, and an electrodeposition liquid containing the ions of an iron-group metal, the electrodeposition liquid being discharged from the electrodialysis bath, is fed to the cathode chamber of the electrodeposition bath via the electrodeposition liquid tank.
[7] The method for treating a liquid containing ions of an iron-group metal according to [5] or [6], wherein an electrode liquid passed through the anode chamber and/or the cathode chamber of the electrodialysis bath is fed to the anode chamber of the electrodeposition bath via an electrode liquid tank, and an anode liquid discharged from the anode chamber of the electrodeposition bath is passed through the anode chamber and/or the cathode chamber of the electrodialysis bath via the electrode liquid tank.
[8] An apparatus for treating a liquid containing ions of an iron-group metal, the apparatus comprising:
   an electrodialysis device including an electrodialysis bath including an anode chamber provided with an anode, a cathode chamber provided with a cathode, and a plurality of cation-exchange membranes interposed between the anode and cathode chambers, a current-application unit that applies a voltage between the anode and the cathode of the electrodialysis bath, and a unit that passes a liquid containing ions of an iron-group metal and an electrodeposition liquid containing a ligand capable of forming a complex with the ions of an iron-group metal through the electrodialysis bath, the electrodialysis device removing the ions of an iron-group metal from the liquid containing ions of an iron-group metal by causing the ions of an iron-group metal contained in the liquid containing ions of an iron-group metal to permeate through the cation-exchange membranes and migrate into the electrodeposition liquid,
   an electrodeposition apparatus including an electrodeposition bath including an anode chamber provided with an anode, a cathode chamber provided with a cathode, and a cation-exchange membrane that separates the anode chamber from the cathode chamber, a current-application unit that applies a voltage between the anode and the cathode, and a unit that passes an electrodeposition liquid discharged from the electrodialysis bath, the electrodeposition liquid containing the ions of an iron-group metal, through the cathode chamber of the electrodeposition bath, the electrodeposition apparatus removing the ions of an iron-group metal from the electrodeposition liquid by causing the iron-group metal contained in the electrodeposition liquid containing the ions of an iron-group metal to be electrodeposited on the cathode, and
   a unit that feeds an electrodeposition liquid from which the ions of an iron-group metal have been removed, the electrodeposition liquid being discharged from the electrodeposition bath, to the electrodialysis bath.
[9] The apparatus for treating a liquid containing ions of an iron-group metal according to [8], wherein the liquid containing ions of an iron-group metal is an acidic decontamination liquid waste having a pH of less than 5 which is produced by a decontamination treatment performed in a nuclear power plant, and wherein the liquid waste from which the ions of an iron-group metal have been removed in the electrodialysis device is reused as a decontamination liquid.
[10] The apparatus for treating a liquid containing ions of an iron-group metal according to [8] or [9], wherein the electrodialysis bath includes
   an anode and a cathode,
   a first bipolar membrane arranged to face the anode,
   a second bipolar membrane arranged to face the cathode,
   a plurality of cation-exchange membranes interposed between the first and second bipolar membranes, and
   one or more third bipolar membranes each interposed between a specific one of adjacent pairs of the cation-exchange membranes,
   wherein a space between the anode and the first bipolar membrane serves as an anode chamber, and a space between the cathode and the second bipolar membrane serves as a cathode chamber, and
   wherein a space between each of the cation-exchange membranes and a specific one of the bipolar membranes which is adjacent to the cation-exchange membrane on a side of the cation-exchange membrane on which the anode is located serves as a deionization chamber, and a space between each of the cation-exchange membranes and a specific one of the bipolar membranes which is adjacent to the cation-exchange membrane on a side of the cation-exchange membrane on which the cathode is located serves as a concentration chamber,
   the apparatus comprising a unit that passes the liquid containing ions of an iron-group metal through the deionization chamber, and
   a unit that passes the electrodeposition liquid through the concentration chamber.
[11] The apparatus for treating a liquid containing ions of an iron-group metal according to [8] or [9], wherein the electrodialysis bath includes
   an anode and a cathode,
   a first hydrogen-permselective cation-exchange membrane arranged to face the anode,
   a second hydrogen-permselective cation-exchange membrane arranged to face the cathode,
   a plurality of cation-exchange membranes interposed between the first and second hydrogen-permselective cation-exchange membranes, and
   one or more third hydrogen-permselective cation-exchange membranes each interposed between a specific one of adjacent pairs of the cation-exchange membranes,
   wherein a space between the anode and the first hydrogen-permselective cation-exchange membrane serves as an anode chamber, and a space between the cathode and the second hydrogen-permselective cation-exchange membrane serves as a cathode chamber, and
   wherein a space between each of the cation-exchange membranes and a specific one of the hydrogen-permselective cation-exchange membranes which is adjacent to the cation-exchange membrane on a side of the cation-exchange membrane on which the anode is located serves as a deionization chamber, and a space between each of the cation-exchange membranes and a specific one of the hydrogen-permselective cation-exchange membranes which is adjacent to the cation-exchange membrane on a side of the cation-exchange membrane on which the cathode is located serves as a concentration chamber,
   the apparatus comprising a unit that passes the liquid containing ions of an iron-group metal through the deionization chamber, and
   a unit that passes the electrodeposition liquid through the concentration chamber.
[12] The apparatus for treating a liquid containing ions of an iron-group metal according to any one of [8] to [11], the apparatus further comprising an electrodeposition liquid tank, a unit that introduces an electrodeposition liquid discharged from the cathode chamber of the electrodeposition bath to the electrodeposition liquid tank, a unit that introduces the electrodeposition liquid stored in the electrodeposition liquid tank to the cathode chamber of the electrodeposition bath, a unit that introduces an electrodeposition liquid discharged from the concentration chamber of the electrodialysis bath to the electrodeposition liquid tank, and a unit that introduces the electrodeposition liquid stored in the electrodeposition liquid tank to the concentration chamber of the electrodialysis bath.
[13] The apparatus for treating a liquid containing ions of an iron-group metal according to any one of [8] to [12], the apparatus further comprising an electrode liquid tank, a unit that introduces an anode liquid discharged from the anode chamber of the electrodeposition bath to the electrode liquid tank, a unit that introduces the electrode liquid stored in the electrode liquid to the anode chamber of the electrodeposition bath, a unit that introduces an electrode liquid discharged from the anode chamber and/or cathode chamber of the electrodialysis bath to the electrode liquid tank, and a unit that introduces the electrode liquid stored in the electrode liquid tank to the anode chamber and/or cathode chamber of the electrodialysis bath.

According to the invention, the rate of permeation of iron-group metal ions through the cation-exchange membranes, which is the step that determines the treatment rate, it is possible to increase the area of cation-exchange membranes compared with the area of electrodes. This makes it possible to increase the treatment rate without increasing the amount of current applied. Moreover, separating the electrodialysis bath from the electrodeposition bath makes it possible to independently set the current densities in the electrodialysis bath and the electrodeposition bath to be appropriate for electrodialysis and electrodeposition, respectively. Furthermore, the structure of the electrodeposition bath can be simplified, which facilitates the replacement of a spent electrode.

### Brief Description of Drawings

Fig. 1 is a system diagram illustrating an example of a treatment apparatus according to an embodiment of the disclosure.
Fig. 2 is a system diagram illustrating another example of a treatment apparatus according to an embodiment of the disclosure.
Fig. 3 is a system diagram illustrating another example of a treatment apparatus according to an embodiment of the disclosure.
Fig. 4 is a system diagram illustrating an example of a treatment apparatus according to an embodiment of the invention.
Fig. 5 is a system diagram illustrating another example of a treatment apparatus according to an embodiment of the invention.
Fig. 6 is a system diagram illustrating an example of an elution apparatus for spent ion-exchange resins according to an embodiment of the disclosure.
Fig. 7 is a system diagram illustrating an example of an apparatus for decontaminating a radioactive waste ion-exchange resin and regenerating and reusing the resulting acidic liquid waste in accordance with the disclosure.
Fig. 8 is a system diagram illustrating another example of an apparatus that decontaminates a radioactive waste ion-exchange resin and regenerates and recovers the resulting acidic liquid waste in accordance with the disclosure.
Fig. 9 is a graph illustrating changes in the pH values of the cathode liquids used in Examples I-1 to I-3 with time.
Fig. 10 is a graph illustrating changes in the Co concentrations in synthesized acidic liquid waste samples used in Examples I-1 to I-3 with time.

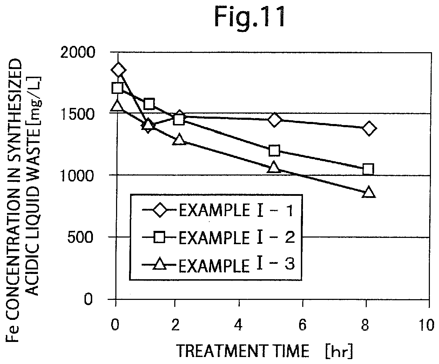

Fig. 11 is a graph illustrating changes in the Fe concentrations in synthesized acidic liquid waste samples used in Examples I-1 to I-3 with time.

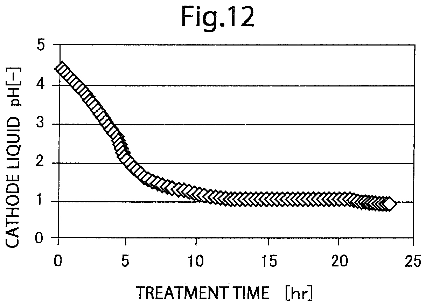

Fig. 12 is a graph illustrating a change in the pH of the cathode liquid used in Comparative example I-1 with time.
Fig. 13(a) is a graph illustrating changes in the Co concentrations in synthesized liquid waste samples used in Examples II-1 to II-3 and Comparative examples II-1 and II-2 with time, and Fig. 13(b) is a graph illustrating changes in the Co concentrations in electrodeposition liquids used in Examples II-1 to II-3 and Comparative examples II-1 and II-2 with time.
Fig. 14(a) is a graph illustrating changes in the Fe concentrations in synthesized liquid waste samples used in Examples II-1 to II-3 and Comparative examples II-1 and II-2 with time, and Fig. 14(b) is a graph illustrating changes in the Fe concentrations in electrodeposition liquids used in Examples II-1 to II-3 and Comparative examples II-1 and II-2 with time.

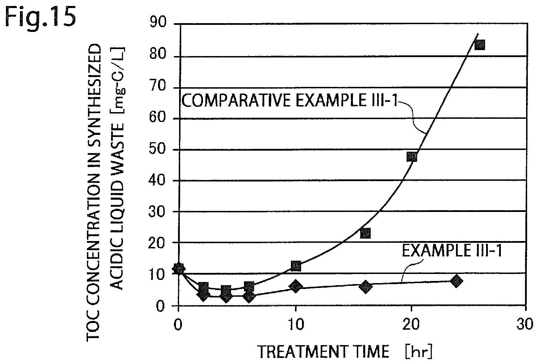

Fig. 15 is a graph illustrating changes in the TOC concentrations in synthesized acidic liquid waste samples used in Example III-1 and Comparative example III-1 with time.

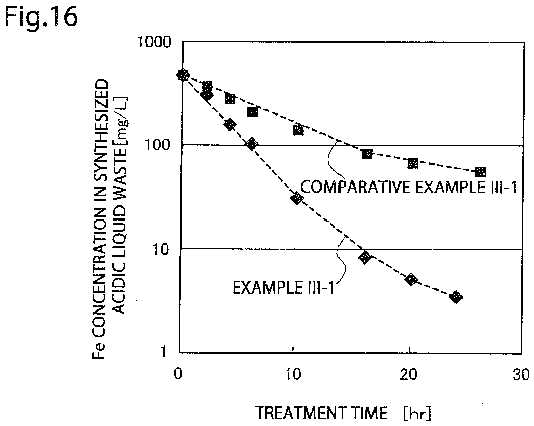

Fig. 16 is a graph illustrating changes in the Fe concentrations in synthesized acidic liquid waste samples used in Example III-1 and Comparative example III-1 with time.

### Description of Embodiments

### 1) Embodiment of the disclosure

An embodiment of the disclosure is described below in detail with reference to the attached drawings.

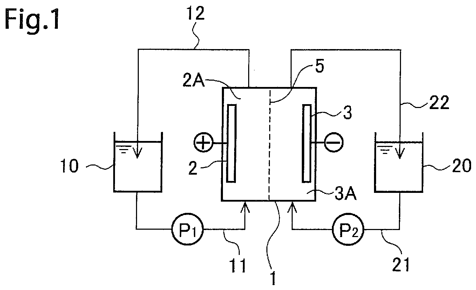

Fig. 1 is a system diagram illustrating an example of an apparatus for treating a metal-ion-containing acidic liquid according to the disclosure.

The electrodeposition apparatus illustrated in Fig. 1 includes an electrodeposition bath 1 constituted by an anode chamber 2A provided with an anode 2, a cathode chamber 3A provided with a cathode 3, and a cation-exchange membrane 5 which separates the anode chamber 2A and the cathode chamber 3A from each other. A metal-ion-containing acidic liquid is passed through the anode chamber 2A. A cathode liquid is passed through the cathode chamber 3A. Upon a voltage being applied between the anode 2 and the cathode 3 with a power source (not illustrated), the metal ions contained in the liquid contained in the anode chamber 2A are caused to permeate through the cation-exchange membrane 5 and migrate into the liquid contained in the cathode chamber 3A. The metal ions precipitate on the cathode 3 in the form of a metal.

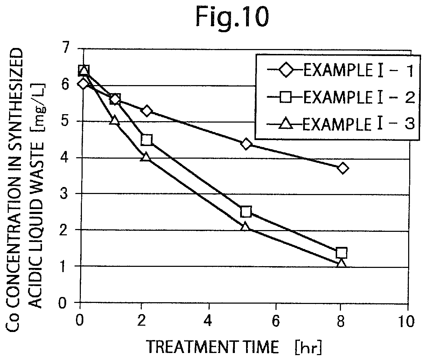

In Fig. 1, 10 denotes a metal-ion-containing acidic liquid tank, which forms a circulatory system in which the metal-ion-containing acidic liquid is introduced to the anode chamber 2A with a pump P₁ through a pipe 11 and the effluent of the anode chamber 2A is returned to the metal-ion-containing acidic liquid tank 10 through a pipe 12. In Fig. 1, 20 denotes a cathode liquid tank, which forms a circulatory system in which the cathode liquid is introduced to the cathode chamber 3A with a pump P₂ through a pipe 21 and the effluent of the cathode chamber 3A is returned to the cathode liquid tank 20 through a pipe 22.

If the metal-ion-containing acidic liquid (acidic liquid waste) having an acidity is directly introduced to the bath, in which the cathode is immersed, without using the cation-exchange membrane, it is necessary to adjust the pH of the liquid to an adequate level with an alkali in order to prevent the metal particles electrodeposited on the cathode from redissolving in the liquid or, more fundamentally, to cause the electrodeposition of metal particles. In the apparatus illustrated in Fig. 1, which includes the cation-exchange membrane, metals can be readily removed by electrodeposition even when the liquid waste is a strongly acidic liquid having a pH of less than 2 or, in particular, less than 1, by controlling the conditions of the cathode liquid contained on the cathode side to be appropriate for electrodeposition.

In the case where a strongly acidic liquid waste is reused after metal ions have been removed therefrom, adjusting the pH of the liquid waste with an alkali makes it difficult to reuse the liquid waste as a strongly acidic liquid. The apparatus illustrated in Fig. 1 enables metal ions to be removed from the liquid waste through the cation-exchange membrane without reducing the acidity of the liquid waste and the treated liquid to be reused.

The liquid to be treated in the disclosure, that is, the liquid introduced to the anode chamber 2A, is an acidic metal-ion-containing liquid that contains metal ions and one or more acids selected from inorganic acids, such as sulfuric acid, hydrochloric acid, and nitric acid, and organic acids, such as formic acid, acetic acid, and oxalic acid. In the disclosure, metal ions are caused to migrate into the cathode liquid through the cation-exchange membrane as illustrated in Fig. 1. This makes it possible to efficiently treat even a liquid waste containing metal ions at a low concentration of about 0.1 to 10000 mg/L or, in particular, about 1 to 1000 mg/L.

Prior to the treatment of the metal-ion-containing acidic liquid, in the disclosure, a salt of the acid same as that contained in the metal-ion-containing acidic liquid introduced to the anode chamber 2A is added to the cathode liquid. In the case where the metal-ion-containing acidic liquid contains sulfuric acid, a sulfuric acid salt is added to the cathode liquid. In the case where the metal-ion-containing acidic liquid contains oxalic acid, an oxalic acid salt is added to the cathode liquid.

The type of the acid salt added to the cathode liquid is not limited; any water-soluble salt of the acid same as that contained in the metal-ion-containing acidic liquid may be used. Examples of the type of the acid salt added to the cathode liquid include a sodium salt, a potassium salt, a magnesium salt, a calcium salt, an iron salt, a cobalt salt, and a nickel salt. The above acid salts may be used alone or in a mixture of two or more.

The molar concentration of the acid salt in the cathode liquid is preferably 0.5 to 2 times, is more preferably 0.8 to 1.5 times, and is further preferably 1.0 to 1.2 times the molar concentration of the acid in the metal-ion-containing acidic liquid. If the amount of the acid salt added to the cathode liquid is excessively small, the permeation of the acid contained in the metal-ion-containing acidic liquid through the cation-exchange membrane and the migration of the acid into the cathode liquid may fail to be suppressed sufficiently. If the amount of the acid salt added to the cathode liquid is excessively large, the acid salt contained in the cathode liquid may disadvantageously permeate through the cation-exchange membrane and migrate into the metal-ion-containing acidic liquid.

The pH of the cathode liquid used in the disclosure, which contains a salt of the acid same as that contained in the metal-ion-containing acidic liquid, is preferably 1.5 to 10, is more preferably 2 to 9, and is further preferably 3 to 8. If the pH of the cathode liquid is excessively low, metals electrodeposited on the cathode may disadvantageously become redissolved in the liquid, which reduces the electrodeposition rate. If the pH of the cathode liquid is excessively high, hydroxides of metals are likely to be generated in the liquid in the form of suspended solids. When the pH of the cathode liquid falls outside the above range, it is preferable to adjust the pH of the cathode liquid appropriately with an alkali or an acid. In the disclosure, it is possible to reduce the likelihood of the acid contained in the metal-ion-containing acidic liquid permeating through the cation-exchange membrane and migrating into the cathode liquid to reduce the pH of the cathode liquid. This eliminates the need to use an alkali as a pH adjuster or reduces the amount of alkali used.

In the disclosure, it is preferable to add a complexing agent suitable for the electrodeposition of metal ions (hereinafter, this complexing agent may be referred to as "complexing agent of the disclosure") to the cathode liquid.

The complexing agent of the disclosure is preferably selected from dicarboxylic acids having two carboxyl groups per molecule and salts thereof (hereinafter, may be referred to as "(salts of) dicarboxylic acids") and tricarboxylic acids having three carboxyl groups per molecule and salts thereof (hereinafter, may be referred to as "(salts of) tricarboxylic acids"). The above complexing agents may be used alone or in a mixture of two or more. The chelating effects of the above (salts of) dicarboxylic acids and (salts of) tricarboxylic acids reduce the formation of the suspended solids during electrodeposition and markedly enhance the advantageous effects of electrodeposition.

Monocarboxylic acids having one carboxyl group per molecule, which weakly bond to metal ions, may allow suspended solids composed of hydroxides of metals to be formed in the liquid or prevent the metals from being uniformly electrodeposited on the cathode. Using carboxylic acids having four or more carboxyl groups per molecule, which excessively strongly bond to metal ions, may cause metals to remain in the liquid and significantly reduce the electrodeposition rate.

The (salts of) dicarboxylic acids and the (salts of) tricarboxylic acids are preferably compounds represented by Formula (1) below in order to further reduce the formation of the suspended solids and increase the electrodeposition rate. The (salts of) dicarboxylic acids and (salts of) tricarboxylic acids represented by Formula (1) below include one to three carbon atoms interposed between the carboxyl groups included in the molecule and are considered to be capable of bonding to metal ions with an adequate bonding force due to the shape of the molecule,

M¹OOC-(CHX¹)ₐ-(NH)_{b}-(CX²X⁴)_{c}-CX³X⁵-COOM²··· (1)

(in Formula (1), X¹, X², and X³ each independently represent H or OH; X⁴ and X⁵ each independently represent H, OH, or COOM³; M¹, M², and M³ each independently represent H, a monovalent alkali metal, or an ammonium ion; and a, b, and c each independently represent an integer of 0 or 1, where X⁴ and X⁵ do not represent COOM³ simultaneously) .

Preferable examples of the dicarboxylic acids include oxalic acid (ethanedioic acid, HOOC-COOH), malonic acid (propanedioic acid, HOOC-CH₂-COOH), succinic acid (butanedioic acid, HOOC-CH₂-CH₂-COOH), glutaric acid (pentanedioic acid, HOOC-CH₂-CH₂-CH₂-COOH), malic acid (2-hydroxybutanedioic acid, HOOC-CH₂-CH(OH)-COOH), tartaric acid (2,3-dihydroxybutanedioic acid, HOOC-CH(OH)-CH(OH)-COOH), and iminodiacetic acid (HOOC-CH₂-NH-CH₂-COOH). Among the above dicarboxylic acids, malonic acid, succinic acid, malic acid, tartaric acid, iminodiacetic acid are particularly preferable. Examples of the tricarboxylic acids include citric acid (HOOC-CH₂-COH(COOH)-CH₂-COOH) and 1,2,3-propanetricarboxylic acid. Among the above tricarboxylic acids, citric acid is particularly preferable. Examples of the types of the salts of the dicarboxylic acids and the tricarboxylic acids include alkali metal salts, such as a sodium salt and a potassium salt; and an ammonium salt.

In the case where the metal-ion-containing acidic liquid contains plural types of metal ions, it is preferable to use an ammonium salt in addition to the (salts of) dicarboxylic acids and/or the (salts of) tricarboxylic acids. For example, in the treatment of a metal-ion-containing acidic liquid containing Co and Fe, a Fe-electrodeposition layer is formed on a Co-electrodeposition layer since, in general, Co has a higher electrodeposition rate than Fe if the ammonium salt is not used. Using the ammonium salt makes the electrodeposition rates of Co and Fe substantially equal to each other and enables Co and Fe to be electrodeposited in the form of an alloy. If Co and Fe are electrodeposited to separately form a Co layer and a Fe layer due to the difference in electrodeposition rate between Co and Fe, the electrodeposited metals are likely to float and detach from the cathode due to the difference in physical properties between Co and Fe and, consequently, a consistent electrodeposition treatment may fail to be achieved.

Any ammonium salt capable of forming ammonium ions in the liquid may be used. Suitable examples thereof include ammonium chloride, ammonium sulfate, ammonium oxalate, and ammonium citrate. The above ammonium salts may be used alone or in a mixture of two or more. In particular, using an ammonium dicarboxylate, such as ammonium oxalate, or an ammonium tricarboxylate, such as ammonium citrate, which serves as both an ammonium salt and the complexing agent of the disclosure, enables the chelating effect of the dicarboxylic acids and the tricarboxylic acids, that is, the reduction in the formation of suspended solids, and the adjustment of the electrodeposition rates of Co and Fe to be both achieved by using only one agent.

The concentration of the complexing agent of the disclosure in the cathode liquid is not limited. The molar concentration of the complexing agent of the disclosure in the cathode liquid introduced to the cathode chamber is preferably 0.1 to 50 times and is particularly preferably 0.5 to 10 times the total molar concentration of metal ions in the metal-ion-containing acidic liquid introduced to the anode chamber. The cathode liquid is an aqueous solution having a pH of 1.5 to 10 or preferably having a pH of 2 to 9 which contains the complexing agent of the disclosure at a proportion of 0.01% to 20% by weight or preferably at a proportion of 0.1% to 5% by weight and a salt of the above-described acid at the above preferable proportion. If the content of the complexing agent of the disclosure in the cathode liquid is excessively low, the formation of the suspended solids may fail to be reduced to a sufficient degree by using the complexing agent of the disclosure. If the content of the complexing agent of the disclosure in the cathode liquid is excessively high, the chelating effects may be enhanced excessively, which reduces the electrodeposition rate.

The complexing agent of the disclosure becomes oxidized and decomposed when brought into contact with the anode of the electrodeposition bath. In the electrodeposition bath used in the disclosure, where the anode chamber and the cathode chamber are separated from each other with the cation-exchange membrane, the electrodeposition liquid containing the complexing agent of the disclosure does not come into direct contact with the anode. This prevents the complexing agent of the disclosure from becoming oxidized and wasted. As a result, the amount of complexing agent of the disclosure charged into the cathode liquid can be reduced to a considerably low level, and the amount of chemicals used can be reduced accordingly.

In the case where the ammonium salt is used, the concentration of the ammonium salt in the cathode liquid is preferably 0.01% to 20% by weight and is more preferably 0.1% to 5% by weight. If the concentration of the ammonium salt in the cathode liquid is excessively low, the above advantageous effects of using the ammonium salt may fail to be sufficiently achieved. If the concentration of the ammonium salt in the cathode liquid is excessively high, the advantageous effects of using the ammonium salt may stop increasing and the amount of chemicals used is increased.

The electrodeposition conditions (e.g., amount of current, current density, and temperature) are not limited. The current density is preferably set to 5 to 600 mA/cm² with respect to the area of the cathode in consideration of the electrodeposition efficiency.

The metal-ion-containing acidic liquid is preferably an acidic liquid that normally contains ions of one or more iron-group metals selected from iron, manganese, cobalt, and nickel or, in particular, one or more iron-group metals selected from iron, cobalt, and nickel. The metal-ion-containing acidic liquid may further contain metals other than iron-group metals.

The disclosure is suitably applied to the treatment of a liquid waste containing radioactive metal ions which is generated in a nuclear power plant, such as a decontamination liquid waste produced in a nuclear power plant or an eluent used for eluting metal ions from ion-exchange resins used in a nuclear power plant. The disclosure is particularly suitably applied to the treatment of an acidic liquid waste having a pH of less than 2. According to the disclosure, it is possible to remove metal ions from the above liquid wastes with efficiency and recover the treated liquid.

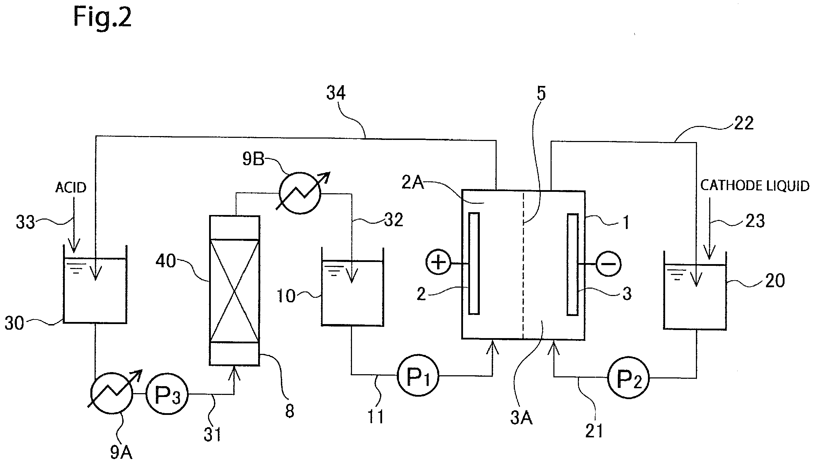

An example case where the disclosure is applied to a process for decontaminating a waste ion-exchange resin spent in a nuclear power plant is described below with reference to Fig. 2. In Fig. 2, members having the same function as in Fig. 1 are denoted by the same reference numeral.

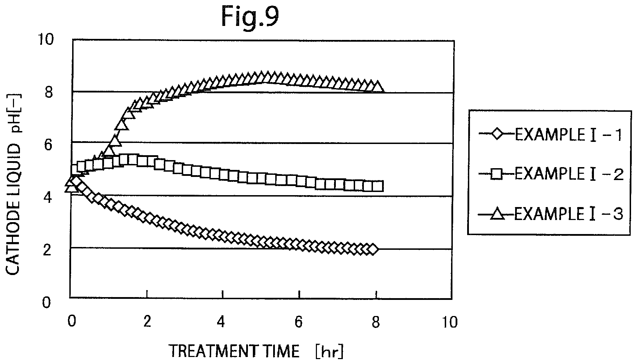

The apparatus illustrated in Fig. 2 includes an eluent tank 30 that stores an eluent used for eluting metal ions from a waste ion-exchange resin; an eluting bath 8 that is a column packed with a waste ion-exchange resin 40; a metal-ion-containing acidic liquid tank 10 that is an acidic waste liquid tank that stores an acidic liquid waste discharged from the eluting bath 8; an electrodeposition bath 1 to which the acidic liquid waste fed from the metal-ion-containing acidic liquid tank (acidic waste liquid tank) 10 is introduced; and a cathode liquid tank 20 that stores a cathode liquid fed to the electrodeposition bath 1. The electrodeposition bath 1 includes an anode chamber 2A provided with an anode 2, a cathode chamber 3A provided with a cathode 3, and a cation-exchange membrane 5 that separates the anode chamber 2A and the cathode chamber 3A from each other. The acidic liquid waste fed from the metal-ion-containing acidic liquid tank (acidic waste liquid tank) 10 is passed through the anode chamber 2A. The cathode liquid is passed through the cathode chamber 3A. In Fig. 2, 9A and 9B denote a heat exchanger.

The eluent stored in the eluent tank 30 is heated to 60°C or more, preferably 70°C to 120°C, or more preferably 80°C to 100°C with the heat exchanger 9A while being transported toward the eluting bath 8 through a pipe 31 with a pump P₃. The eluent is subsequently passed upwardly through the eluting bath 8. While being transported through a pipe 32, the effluent (acidic liquid waste) of the eluting bath 8 is cooled to a temperature of less than 60°C at which the degree of degradation of the cation-exchange membrane 8 included in the electrodeposition bath 4 is small, such as a temperature of 10°C or more and less than 60°C, with the heat exchanger 9B and subsequently fed to the metal-ion-containing acidic liquid tank (acidic waste liquid tank) 10. The acidic liquid waste stored in the metal-ion-containing acidic liquid tank (acidic waste liquid tank) 10 is introduced to the anode chamber 2A of the electrodeposition bath 1 through a pipe 11 with a pump P₁. The liquid treated by electrodeposition is returned to the eluent tank 30 through a pipe 34 and reused as an eluent.

The cathode liquid contained in the cathode liquid tank 20 is introduced to the cathode chamber 3A of the electrodeposition bath 1 through a pipe 21 with a pump P₂ and then returned to the cathode liquid tank 20 through a pipe 22.

An acid is supplied to the eluent tank 30 as needed through a pipe 33. The cathode liquid is supplied to the cathode liquid tank 20 through a pipe 23.

In this apparatus, the heated eluent is passed through the eluting bath 8 packed with the waste ion-exchange resin 40. This enables ionic radioactive nuclear species adsorbed on the waste ion-exchange resin 40 to become eluted and removed and crud particles mixed in the waste ion-exchange resin 40 or buried in particles of the resin to be removed by dissolution. The eluent (acidic liquid waste) that contains the ionic radioactive nuclear species and the dissolved crud particles as a result of being brought into contact with the waste ion-exchange resin 40 is introduced to the anode chamber 2A of the electrodeposition bath 1 via the metal-ion-containing acidic liquid tank (acidic waste liquid tank) 10.

Upon a voltage being applied between the anode 2 and the cathode 3 of the electrodeposition bath 1, metal ions such as radioactive metal ions contained in the acidic liquid waste and iron ions resulting from the crud particles are caused to permeate through the cation-exchange membrane 5, migrate into the cathode chamber 3A, and be electrodeposited on the cathode 3. The liquid produced by treating the acidic liquid waste in the electrodeposition bath 1, from which the metal ions have been removed, is returned to the eluent tank 30 and reused.

The cathode liquid contained in the cathode chamber 3A is circulated through the cathode liquid tank 20 with the pump P₂ and reused while a certain amount of cathode liquid which is equal to the reduction in the amount of cathode liquid is added to the cathode liquid tank 20.

The eluent used for decontaminating the waste ion-exchange resin in the apparatus illustrated in Fig. 2 is preferably an acidic eluent heated at 60°C or more. Using the heated acidic eluent makes it possible to remove the radioactive metal ions adsorbed on the waste ion-exchange resin that is a cation-exchange resin by elution as a result of ion-exchange between the radioactive metal ions and H⁺ ions. In addition, it also becomes possible to remove the crud particles mixed in the waste ion-exchange resin by dissolution with efficiency.

The acidic eluent may be an aqueous solution of an inorganic acid, such as sulfuric acid, hydrochloric acid, or nitric acid, or an organic acid, such as formic acid, acetic acid, or oxalic acid. The above acids may be used alone or in a mixture of two or more. It is preferable to use sulfuric acid and/or oxalic acid, which are less volatile even when heated at the point of use and are not considered to be dangerous substances.

A suitable acid concentration in the eluent varies with the type of the acid used. The concentration of sulfuric acid in the eluent is preferably 5% to 40% by weight and is more preferably 10% to 30% by weight. The concentration of oxalic acid in the eluent is preferably 0.1% to 40% by weight and is more preferably 1% to 20% by weight. If the acid concentration is lower than the above range, the efficiency with which the primary component of the crud particles, that is, hematite (α-Fe₂O₃), dissolves in the eluent may be reduced. Since the crud particles are mixed in the waste ion-exchange resin or buried in particles of the resin and composed primarily of hardly soluble hematite, it is difficult to dissolve the crud particles in an eluent having a low acid concentration. If the acid concentration in the eluent is high, an excessively large amount of hydrogen is produced in the subsequent electrodeposition bath, which reduces the electrodeposition efficiency.

In the apparatus illustrated in Fig. 2, substances that form metal cations when dissolved, such as cobalt-60 and nickel-63 contained in a radioactive waste ion-exchange resin, are caused to be electrodeposited on the cathode. This enables the radioactive substances to be concentrated at a high level and reduces the dose rate of the waste ion-exchange resin to a considerably low level. The treated waste ion-exchange resin can be incinerated. Incinerating the waste ion-exchange resin to produce incineration ash reduces the volume of the waste to 1/100 to 1/200 the initial volume.

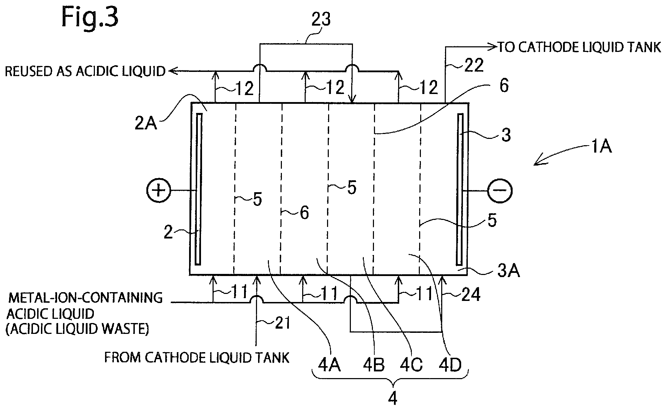

Fig. 3 illustrates another example of the electrodeposition bath according to the embodiment which corresponds to the electrodeposition bath 1 included in the apparatuses illustrated in Figs. 1 and 2. In Fig. 3, members having the same function as in Figs. 1 and 2 are denoted by the same reference numeral.

The electrodeposition bath 1A illustrated in Fig. 3 includes an anode chamber 2A provided with an anode 2, a cathode chamber 3A provided with a cathode 3, and one or more intermediate chambers 4 interposed between the anode chamber 2A and the cathode chamber 3A. In this embodiment, the number of the intermediate chambers 4 is four. The anode chamber 2A, a first intermediate chamber 4A, a second intermediate chamber 4B, a third intermediate chamber 4C, a fourth intermediate chamber 4D, and the cathode chamber 3A are arranged in this order. Each of the pairs of adjacent chambers are separated from each other with an ion-exchange membrane.

The ion-exchange membranes interposed between the anode chamber 2A and the first intermediate chamber 4A, between the second intermediate chamber 4B and the third intermediate chamber 4C, and between the fourth intermediate chamber 4D and the cathode chamber 3A are cation-exchange membranes 5. The ion-exchange membranes interposed between the first intermediate chamber 4A and the second intermediate chamber 4B and between the third intermediate chamber 4C and the fourth intermediate chamber 4D are bipolar membranes 6. The bipolar membranes 6 are ion-exchange membranes having a surface including cation-exchange groups and a surface including anion-exchange groups. The bipolar membranes 6 are each arranged such that the surface including cation-exchange groups faces the cathode chamber 3A and the surface including anion-exchange groups faces the anode chamber 2A. Although the bipolar membranes 6 may be replaced with anion-exchange membranes, in such a case, the pH of the cathode liquid may be reduced disadvantageously as a result of the acid contained in the acidic liquid waste permeating through the anion-exchange membranes and migrating into the cathode liquid. Furthermore, the acidity of the acidic liquid waste may be reduced, which makes it difficult to reuse the liquid waste as an acidic liquid.

The metal-ion-containing acidic liquid (acidic liquid waste) is passed through the anode chamber 2A, the second intermediate chamber 4B, and the fourth intermediate chamber 4D in parallel through the pipe 11 and subsequently discharged through a pipe 12. The effluent is reused as an acidic liquid having a reduced concentration of metal ions. The cathode liquid is introduced from the cathode liquid tank (the cathode liquid tank 20 illustrated in Figs. 1 and 2) to the first intermediate chamber 4A through a pipe 21. The effluent of the first intermediate chamber 4A is introduced to the third intermediate chamber 4C through a pipe 23. The effluent of the third intermediate chamber 4C is introduced to the cathode chamber 3A through a pipe 24. The effluent of the cathode chamber 3A is returned to the cathode liquid tank through a pipe 22 in a circulatory system.

In the apparatus illustrated in Fig. 3, upon a voltage being applied between the anode 2 and the cathode 3, metal ions contained in the acidic liquid waste are caused to permeate through the cation-exchange membranes 5, migrate into the cathode liquid, and to be electrodeposited on the cathode 3.

Although the acidic liquid waste is introduced to the anode chamber 2A in the electrodeposition bath 1A illustrated in Fig. 3, it is preferable that the acidic liquid waste be not introduced to the anode chamber 2A, the electrodeposition apparatus further include an anode liquid tank, and an anode liquid be circulated through the anode liquid tank and the anode chamber 2A. In such a case, it is preferable to add an electrolyte that is not likely to be consumed by an anodic reaction, such as sulfuric acid or sodium sulfate, to the anode liquid. In the case where the complexing agent of the disclosure is added to the cathode liquid, it is preferable not to introduce the cathode liquid to the anode chamber 2A, because, when the liquid is introduced to the anode chamber 2A, the complexing agent may become decomposed by the anodic reaction.

Although the acidic liquid waste is passed through the anode chamber 2A, the second intermediate chamber 4B, and the fourth intermediate chamber 4D in parallel in Fig. 3, it is also possible to pass the acidic liquid waste through the anode chamber 2A, the second intermediate chamber 4B, and the fourth intermediate chamber 4D in series in this order.

The treatment apparatuses illustrated in Figs. 1 to 3 are merely suitable examples of a treatment apparatus according to an embodiment of the disclosure. The treatment apparatus according to the disclosure is not limited to the treatment apparatuses illustrated in Figs. 1 to 3.

While the electrodeposition bath 1 or 1A included in the apparatuses illustrated in Figs. 1 to 3 has a closed system, the electrodeposition bath preferably has an open system in which the upper portion of the electrodeposition bath is opened because a hydrogen gas is generated on the cathode. Opening the upper portion of the electrodeposition bath also facilitates the replacement of a cathode on which metals are electrodeposited. While the eluent is passed through the eluting bath 8 upwardly in Fig. 2, the eluent may be passed through the eluting bath 8 downwardly. In the case where the waste ion-exchange resin is in a powder form, the eluent is preferably passed through the eluting bath 8 upwardly, because such a waste ion-exchange resin is likely to increase the pressure difference that occurs when the eluent is passed through the eluting bath 8. In the electrodeposition bath 1, the acidic liquid waste and the cathode liquid may be passed through the respective chambers in the directions opposite to each other across the cation-exchange membrane 5. It is also possible to exchange heat between the eluent introduced to the eluting bath 8 and the acidic liquid waste discharged from the eluting bath 8.

While four intermediate chambers 4 are stacked on top of one another between the anode chamber 2A and the cathode chamber 3A in Fig. 3, the number of the intermediate chambers is not limited to four and may be one, two, three, or five or more. It is preferable to separate the anode chamber from the intermediate chamber adjacent to the anode chamber with a cation-exchange membrane, separate the cathode chamber from the intermediate chamber adjacent to the cathode chamber with a cation-exchange membrane, and arrange a cation-exchange membrane or a bipolar membrane between each of the pairs of the adjacent intermediate chambers such that cation-exchange membranes and bipolar membranes are alternately arranged.

It is preferable to interpose the intermediate chambers between the anode chamber and the cathode chamber in order to increase the rate at which metal ions migrate from the acidic liquid waste into the cathode liquid per electrodeposition bath without increasing the current density.

An embodiment of the invention is described below in detail.

### [Apparatus for Treating Iron-Group Metal-Ion-Containing Liquid]

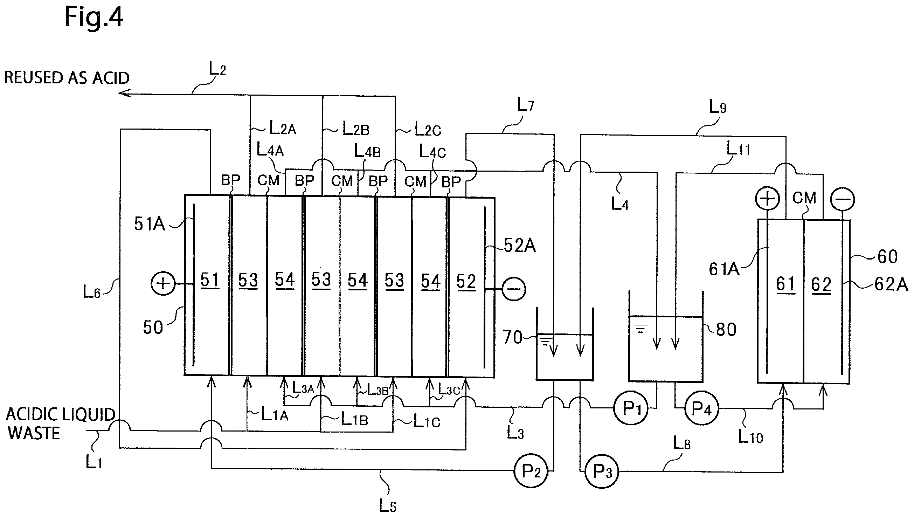

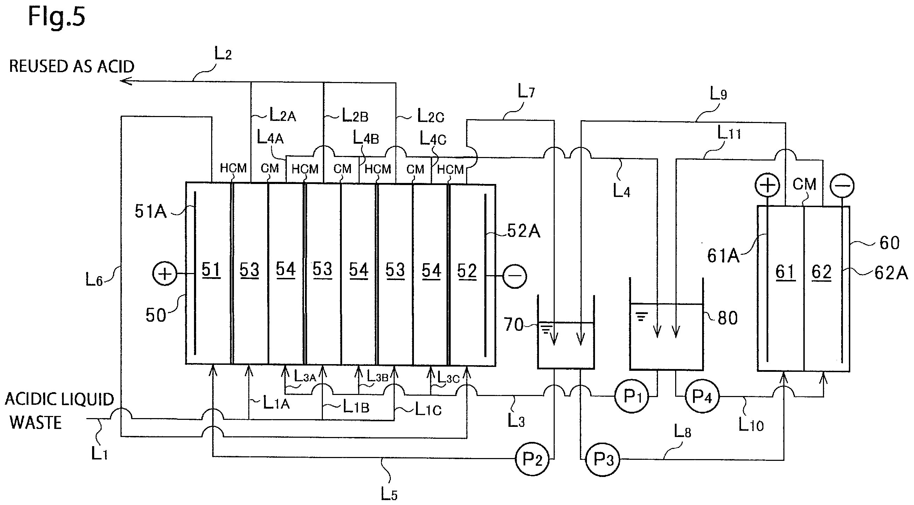

An apparatus for treating a liquid containing iron-group metal ions according to an embodiment of the invention is described below with reference to Figs. 4 and 5.

Figs. 4 and 5 are system diagrams each illustrating an example of the apparatus for treating an iron-group metal-ion-containing liquid according to an embodiment of the invention.

For describing the invention, Figs. 4 and 5 each illustrate an example case where an iron-group metal-ion-containing liquid that is an acidic decontamination liquid waste having a pH of less than 5 (hereinafter, referred to simply as "waste acid") which is produced in a decontamination process performed in a nuclear power plant is treated, and the iron-group metal-ion-containing liquid from which iron-group metal ions have been removed in an electrodialysis bath is reused as a decontamination liquid. The second invention is not limited to the treatment of the above waste acid.

The apparatus for treating an iron-group metal-ion-containing liquid illustrated in Fig. 4 includes an electrodialysis bath 50 and an electrodeposition bath 60.

The electrodialysis bath 50 includes an anode 51A, a cathode 52A, and bipolar membranes BP and cation-exchange membranes CM that are alternately arranged between the anode 51A and the cathode 52A.

One of the bipolar membranes (first bipolar membrane) BP is arranged to face the anode 51A. The space between the anode 51A and the first bipolar membrane BP serves as an anode chamber 51.

One of the bipolar membranes BP (second bipolar membrane) BP is arranged to face the cathode 52A. The space between the cathode 52A and the second bipolar membrane BP serves as a cathode chamber 52.

Plural (three in Fig. 4) cation-exchange membranes CM are interposed, at predetermined intervals, between the first bipolar membrane BP that defines the anode chamber 51 and the second bipolar membrane BP that defines the cathode chamber 52. Bipolar membranes (third bipolar membranes) BP are each further interposed between a specific one of the pairs of adjacent cation-exchange membranes CM at certain intervals so as to form liquid chambers.

The chamber located on the anode-51A side of each of the cation-exchange membranes CM serves as a deionization chamber 53 through which the waste acid is passed. The chamber located on the cathode-52A side of each of the cation-exchange membranes CM serves as a concentration chamber 54 through which the electrodeposition liquid is passed.

The bipolar membranes BP are ion-exchange membranes having a structure constituted by a cation-exchange membrane layer and an anion-exchange membrane layer stacked on top of each other. The bipolar membranes BP are each arranged such that the anion-exchange membrane layer faces the anode 51A and the cation-exchange membrane layer faces the cathode 52A. The bipolar membranes BP do not allow cations and anions to permeate therethrough even when a voltage is applied across the bipolar membranes, and the bipolar membranes BP carry current as a result of water being dissociated into hydrogen ions and hydroxide ions therein.

In electrodialysis bath 50 illustrated in Fig. 4, upon a voltage being applied between the anode 51A and the cathode 52A, the iron-group metal ions contained in the waste acid passed through the deionization chambers 53 permeate the cation-exchange membranes CM and migrate into the electrodeposition liquid passed through the concentration chambers 54. As a result, the iron-group metal ions contained in the waste acid can be removed. Although the acid ions (in this embodiment, sulfate ions and hydrogensulfate ions) contained in the waste acid are electrically attracted to the anode 51A, they remain in the waste acid since the bipolar membranes BP do not allow the acid ions to permeate therethrough. Therefore, the liquid produced by the above electrodialysis treatment can be reused as an acidic liquid.

In Fig. 4, the waste acid is introduced to the deionization chambers 53 of the electrodialysis bath 50 through lines L₁, L_{1A}, L_{1B}, and L_{1C}, and the iron-group metal ions are removed from the waste acid by electrodialysis performed in the electrodialysis bath 50. The effluent is returned to the decontamination process through lines L_{2A}, L_{2B}, L_{2C}, and L₂ and reused.

The electrodeposition liquid stored in the electrodeposition liquid tank 80 is introduced to the concentration chambers 54 of the electrodialysis bath 50 with a pump P₁ through lines L₃, L_{3A}, L_{3B}, and L_{3C}. The electrodeposition liquid that contains the iron-group metal ions that have permeated through the cation-exchange membranes CM and migrated from the deionization chambers 53 to the concentration chambers 54 as a result of the electrodialysis performed in the electrodialysis bath 50 is returned to the electrodeposition liquid tank 80 through lines L_{4A}, L_{4B}, L_{4C}, and L₄. Since the iron-group metal ions contained in the electrodeposition liquid stored in the electrodeposition liquid tank 80 are removed in the electrodeposition bath 60 as described below, an electrodeposition liquid from which the iron-group metal ions have been removed is fed to the electrodialysis bath 50.

An electrode liquid containing an electrolyte is circulated through the anode chamber 51 and the cathode chamber 52 of the electrodialysis bath 50. It is necessary to select an electrolyte that does not become oxidized on the anode 51A or reduced on the cathode 52A and does not precipitate on the cathode 52A. It is preferable to use sulfuric acid or an alkali metal salt of sulfuric acid as an electrolyte.

The apparatus illustrated in Fig. 4 includes an electrode liquid tank 70 that also contains the anode liquid used in the electrodeposition bath 60. The electrode liquid contained in the electrode liquid tank 70 is introduced to the anode chamber 51 of the electrodialysis bath 50 with a pump P₂ through a line L₅, subsequently introduced to the cathode chamber 52 through a line L₆, and returned to the electrode liquid tank 70 through a line L₇ in a circulatory system. The electrode liquid contained in the electrode liquid tank 70 is introduced to the anode chamber 21 of the electrodeposition bath 60 with a pump P₃ through a line L₈ and returned to the electrode liquid tank 70 through a line L₉ in a circulatory system. The structure of the electrode liquid tank is not limited to the above one; the electrode liquid tank may be provided for each electrode chamber.

While the electrodialysis bath 50 illustrated in Fig. 4 includes three cation-exchange membranes CM and three deionization chambers 53, the number of the cation-exchange membranes CM may be two or more and is not limited to three. The larger the number of the cation-exchange membranes included in the electrodialysis bath, the larger the area of the cation-exchange membranes and the higher the rate of permeation of the iron-group metal ions. An excessively large number of the cation-exchange membranes included in the electrodialysis bath may result in an increase in the resistance of the entire electrodialysis bath, which increases the power consumption and the temperature of the electrodialysis bath. If the temperature of the electrodialysis bath is 40°C or more, the ion-exchange membranes may become degraded. In the case where the temperature of the electrodialysis bath is increasing, it is preferable to cool the waste acid, the electrodeposition liquid, or the electrode liquid as needed such that the temperature of the electrodialysis bath does not reach 40°C or more.

While the waste acid is passed through the deionization chambers 53 in the direction same as the direction in which the electrodeposition liquid is passed through the concentration chambers 54 in Fig. 4, they may be passed through the respective chambers in the direction opposite to each other. The directions in which the electrode liquid is passed through the anode chamber 51 and the cathode chamber 52 are also not limited.

It is preferable to interpose an adequate spacer between each of the pairs of the cation-exchange membrane CM and the bipolar membrane BP included in the electrodialysis bath 50 in order to prevent the blockage of channels which may occur when the adjacent membranes are brought into contact with each other as a result of, for example, the warpage of the membranes. The spacer may have any shape that allows the channels to be maintained; spacers having a net-like shape, a honeycomb shape or a ball-like shape may be used. The material for the spacer is preferably selected with consideration of the properties of the liquid that is to be passed through the chambers. In the case where the above-described waste acid is treated, a spacer resistant to acids is selected.

The electrodeposition bath 60 is preferably a two-compartment electrodeposition bath 60 that includes an anode chamber 61 provided with an anode 61A, a cathode chamber 62 provided with a cathode 62A, and a cation-exchange membrane CM that separates the anode chamber 61 and the cathode chamber 62 from each other as illustrated in Fig. 4. The electrodeposition liquid fed from the electrodialysis bath 50 to the electrodeposition liquid tank 80, which contains the iron-group metal ions, is introduced to the cathode chamber 62 of the electrodeposition bath 60 with a pump P₄ through a line L₁₀. Upon a voltage being applied between the anode 61A and the cathode 62A of the electrodeposition bath 60, the iron-group metal ions contained in the electrodeposition liquid are caused to precipitate on the cathode 62A in the form of iron-group metals and be fixed on the cathode 62A by electrodeposition.

The anode liquid used in the electrodeposition bath 60 is, similarly to that used in the electrodialysis bath 50, an electrolyte solution that does not become oxidized on the anode 61A. While the anode liquid used in the electrodeposition bath 60 also serves as an electrode liquid in the electrodialysis bath 50 in Fig. 4, a liquid other than the anode liquid may be used as an electrode liquid in the electrodialysis bath 50.

As in the electrodialysis bath 50, the anode liquid may be passed through the anode chamber 61 in the direction same as the direction in which the electrodeposition liquid is passed through the cathode chamber 62 as illustrated in Fig. 4. The liquids may alternatively be passed through the respective chambers in the direction opposite to each other.

The ion-exchange membranes each interposed between a specific one of the pairs of adjacent cation-exchange membranes in the electrodialysis bath require the following conditions:
(1) Not to allow the iron-group metal ions to permeate therethrough (if a membrane that allows the iron-group metal ions to permeate therethrough is used, the iron-group metal ions that have permeated through a cation-exchange membrane and migrated into the electrodeposition liquid may disadvantageously permeate through the membrane and return to the waste acid); and
(2) Not to allow even acidic ions to permeate therethrough (if a membrane that allows acidic ions to permeate therethrough is used, acid ions may permeate through the membrane and disadvantageously migrate into the electrodeposition liquid or the electrode liquid contained in the anode chamber and, consequently, it becomes not possible to reuse the waste acid as an acidic liquid).

From the above points of view, the ion-exchange membranes are not limited to bipolar membranes and may be hydrogen-permselective cation-exchange membranes. Hydrogen-permselective cation-exchange membranes are cation-exchange membranes having a large hydrogen-ion transport number (contribution of migration of hydrogen ions on current) and satisfying the above requirements. Examples of commercial hydrogen-permselective cation-exchange membranes include SELEMION CMF produced by AGC Engineering Co., Ltd.

The apparatus illustrated in Fig. 5 has the same structure as that illustrated in Fig. 4, except that the electrodialysis bath 50 includes hydrogen-permselective cation-exchange membranes HCM instead of the bipolar membranes BP. In Fig. 5, members having the same function as in Fig. 4 are denoted by the same reference numeral.

In the invention, the electrodialysis bath and the electrodeposition bath are separated from each other as illustrated in Figs. 4 and 5. This enables the conditions such as the current density to be independently changed such that the rate of electrodialysis of the iron-group metal ions in the electrodialysis bath and the rate of electrodeposition of the iron-group metal ions in the electrodeposition bath are each set to an optimum rate.

The current density in the electrodialysis bath, in which electrodialysis of the iron-group metal ions is performed, is preferably 10 to 400 mA/cm² and is more preferably 20 to 200 mA/cm² with respect to the area of the cathode regardless whether bipolar membranes are used or hydrogen-permselective cation-exchange membranes are used.

The current density in the electrodeposition bath with respect to the area of the cathode is preferably 5 to 200 mA/cm² and is more preferably 10 to 150 mA/cm².

In the invention, the electrodialysis bath and electrodeposition bath are separated from each other. This simplifies the structure of the electrodeposition bath and enables the operation for replacing a cathode on which iron-group metals precipitated are adhered by electrodeposition to be readily carried out without being inhibited by complex components of the electrodeposition bath.

When the apparatus for treating an iron-group metal-ion-containing liquid according to the invention, which includes the electrodialysis bath and the electrodeposition bath, is used in the process for decontaminating a waste ion-exchange resin used in a nuclear power plant, as in the apparatus according to the disclosure illustrated in Fig. 2, the treatment apparatus is provided with an eluent tank 30 that stores an eluent used for eluting iron-group metal ions from the waste ion-exchange resin, an eluting bath 8 that is a column packed with the waste ion-exchange resin, and an iron-group metal-ion-containing liquid tank 10 that is an acidic waste liquid tank that stores an acidic liquid waste discharged from the eluting bath 8. The acidic liquid waste fed from the iron-group metal-ion-containing liquid tank (acidic waste liquid tank) is passed through the deionization chambers 53 of the electrodialysis bath 50 in order to remove the iron-group metal ions. The treated acidic liquid waste is returned to the eluent tank 10 and reused as an eluent.

### [Iron-Group Metal-Ion-Containing Liquid]

The iron-group metal-ion-containing liquid that is to be treated in the invention is a liquid that generally contains ions of one or more metals selected from iron, manganese, cobalt, and nickel or, in particular, one or more metals selected from iron, cobalt, and nickel. The iron-group metal-ion-containing liquid may contain metals other than iron-group metals. The invention is suitably applied to the treatment of liquid wastes containing radioactive iron-group metal ions which are produced in a nuclear power plant, such as the liquid wastes described in (i) and (ii) below, and particularly to the treatment of an acidic liquid waste having a pH of less than 5 or, further particularly, having a pH of less than 2. It is possible to remove iron-group metal ions from the above liquid wastes with efficiency and reuse the treated liquid.
(i) A decontamination liquid waste produced by dissolving, with an acid, radioactive substances removed from surfaces of the metal members constituting devices or pipes included in a primary cooling system used in a nuclear power plant or systems including them which are contaminated with the radioactive substance.
(ii) An acidic elution liquid waste produced by eluting radioactive metal ions from an ion-exchange resin (an ion-exchange resin used for cleaning a cooling water system that comes into direct contact with a fuel rod and contains radioactive substances, such as a reactor water clean-up system (CUW) or a fuel pool cooling and clean-up system (FPC), or an ion-exchange resin used for removing radioactive metal ions from the decontamination liquid waste described in (i) above) spent in a nuclear power plant with an acid in order to remove the radioactive metal ions.

The above decontamination liquid waste and the acidic elution liquid waste contain radioactive cobalt, which is one of the iron-group metal ions. According to the second invention, it is possible to advantageously fix radioactive cobalt on the cathode of the electrodeposition bath in the form of a metal with small bulkiness with stability.

### [Electrodeposition Liquid]

The electrodeposition liquid used in the invention contains a ligand capable of forming a complex with the iron-group metal ions contained in the iron-group metal-ion-containing liquid (hereinafter, may be referred to as "complexing agent according to the invention"). If the pH of the electrodeposition liquid is excessively low, the iron-group metals electrodeposited on the cathode of the electrodeposition bath may disadvantageously become redissolved in the liquid and, consequently, the electrodeposition rate may be reduced. If the pH of the electrodeposition liquid is excessively high, hydroxides of the iron-group metals are likely to be formed in the liquid in the form of suspended solids. It is preferable to adjust the pH of the electrodeposition liquid to be 1 to 9 or, in particular 2 to 8 with an alkali or an acid as needed.

Examples of the complexing agent of the invention are the (salts of) dicarboxylic acids and the (salts of) tricarboxylic acids described above as examples of the complexing agent of the disclosure. Preferable examples of the complexing agent of the invention are also the same as in the above disclosure.

In the case where the iron-group metal-ion-containing liquid contains plural types of iron-group metal ions, it is preferable also in the invention to use an ammonium salt in addition to the (salts of) dicarboxylic acids and/or the (salts of) tricarboxylic acids for the same reasons as in the disclosure. Examples of the ammonium salt are the same as those described in the above disclosure as examples. Preferable examples of the ammonium salt are also the same as in the first example.

The concentration of the complexing agent of the invention in the electrodeposition liquid used in the invention is not limited. The molar concentration of the complexing agent of the invention in the electrodeposition liquid introduced to the concentration chambers of the electrodialysis bath is preferably 0.1 to 50 times and is particularly preferably 0.5 to 10 times the total molar concentration of the iron-group metal ions contained in the iron-group metal-ion-containing liquid introduced to the deionization chambers of the electrodialysis bath. An example of the electrodeposition liquid is an aqueous solution having a pH of 1 to 9 or preferably having a pH of 2 to 8 which contains the complexing agent of the invention at a concentration of 0.01% to 20% by weight or preferably at a concentration of 0.1% to 5% by weight. If the amount of the complexing agent of the invention is excessively small, the formation of the suspended solids may fail to be reduced to a sufficient degree by using the complexing agent in the invention. If the amount of the complexing agent of the invention is excessively large, the chelating effect of the complexing agent is excessively increased and, as a result, the electrodeposition rate may be reduced.

The complexing agent of the invention becomes decomposed by oxidation when brought into contact with the anode of the electrodeposition bath. As illustrated in Figs. 4 and 5, the concentration chambers 54 through which the electrodeposition liquid is passed do not come into direct contact with the anode in the electrodialysis bath 50. Moreover, in the electrodeposition bath 60, the anode chamber 21 and the cathode chamber 62 are separated from each other with the cation-exchange membrane CM, and the electrodeposition liquid containing the complexing agent of the invention does not come into direct contact with the anode. Therefore, there is no risk of the complexing agent of the invention becoming oxidized and wasted. In the invention, the amount of complexing agent of the invention which needs to be supplied to the electrodeposition liquid is considerably small. This reduces the amount of chemicals used.

In the case where the ammonium salt is used, the concentration of the ammonium salt in the electrodeposition liquid is preferably set to 0.01% to 20% by weight and is more preferably set to 0.1% to 5% by weight. If the concentration of the ammonium salt is excessively low, the above-described advantageous effects of using the ammonium salt may fail to be achieved to a sufficient degree. If the concentration of the ammonium salt is excessively high, the advantageous effects may stop increasing and the amount of chemicals is increased.

### 3) Further disclosure

The acidic liquid waste that is to be treated in the disclosure may be any acidic liquid waste that contains metal ions such as ions of iron-group metals, such as iron, cobalt, and nickel. The disclosure may be suitably applied to the treatments of the acidic liquid wastes described in (1) and (2) below.
(1) An acidic liquid waste produced by dissolving, with an acid, radioactive substances removed from surfaces of the metal members constituting devices or pipes included in a primary cooling system used in a nuclear power plant or systems including them which are contaminated with the radioactive substance.
(2) An acidic elution liquid waste produced by eluting radioactive metal ions from an ion-exchange resin (an ion-exchange resin used for cleaning a cooling water system that comes into direct contact with a fuel rod and contains radioactive substances, such as a reactor water clean-up system (CUW) or a fuel pool cooling and clean-up system (FPC), or an ion-exchange resin used for removing radioactive metal ions from the acidic liquid waste described in (1) above) spent in a nuclear power plant with an acid in order to remove the radioactive metal ions.

The above acidic liquid wastes commonly have a pH of 5 or less and are preferably strong acidic liquid wastes having a pH of 2 or less.

The above acidic decontamination liquid waste and the acidic elution liquid waste contain radioactive cobalt, which is one of the iron-group ions. According to the disclosure, it is possible to fix radioactive cobalt contained in the above acidic liquid wastes on the cathode of an electrodeposition bath in the form of a metal with small bulkiness with stability. The acidic liquid wastes from which the radioactive cobalt has been removed can be effectively reused as an acidic liquid in the above decontamination treatment and the acid-elution treatment.

In the disclosure, metal ions are removed from such an acidic liquid waste by causing the metal ions to permeate through a cation-exchange membrane as a result of electrodialysis using the cation-exchange membrane. The cation-exchange membrane has a thickness of 0.25 to 1 mm. Using a relatively thick cation-exchange membrane having a thickness of 0.25 mm or more reduces the likelihood of acid group anions contained in the acidic liquid waste permeating through the cation-exchange membrane to reduce the acid concentration in the acidic liquid waste and the pH of the electrodeposition liquid. Furthermore, in the case where the electrodeposition liquid contains the organic acid or organic acid salt described below, the likelihood of the acid group anions migrating from the electrodeposition liquid into the acidic liquid waste through the cation-exchange membrane can be reduced. Although the thickness of the cation-exchange membrane is preferably maximized in order to prevent the permeation of the acid group anions therethrough, it is not preferable to increase the thickness of the cation-exchange membrane to an excessive degree because a cation-exchange membrane having an excessively large thickness has a high resistance and increases the amount of power consumption.

The thickness of the cation-exchange membrane is preferably 0.30 to 0.80 mm and is more preferably 0.35 to 0.50 mm.

In electrodialysis, thin ion-exchange membranes having a thickness of 0.20 mm or less are commonly used in order to minimize the resistance of the membranes and the amount of power consumption by reducing the thickness of the ion-exchange membranes. In the disclosure, a cation-exchange membrane having the above thickness is used in order to prevent the permeation of the acid group anions.

The lower the density of exchange groups in the cation-exchange membrane used in the disclosure, the larger the reduction in the permeation of the acid group anions contained in the acidic liquid waste through the cation-exchange membrane. In the case where the electrodeposition liquid contains an organic acid or an organic acid salt, the lower the density of exchange groups in the cation-exchange membrane, the larger the reduction in the migration of the acid group anions from the electrodeposition liquid into the acidic liquid waste through the cation-exchange membrane. It is not preferable to reduce the density of exchange groups in the cation-exchange membrane to an excessively low level because, if the density of exchange groups in the cation-exchange membrane is excessively low, the rate at which metal ions permeate through the cation-exchange membrane is low. In addition, the resistance of the membrane is high, which results in a large amount of power consumption. For the above reasons, the density of exchange groups in the cation-exchange membrane used in the disclosure is preferably 1.0 to 2 meq/g-dry-membrane and is more preferably 1.5 to 1.8 meq/g-dry-membrane.

Specifically, the disclosure may be implemented on the basis of the method and apparatus for treating a metal-ion-containing acidic liquid according to the disclosure or the method and apparatus for treating an iron-group metal-ion-containing liquid according to the invention. In other words, in the disclosure, specifically, an acidic liquid waste is treated as in the disclosure or invention by replacing the cation-exchange membrane included in any one of the apparatuses illustrated in Figs. 1 to 5 with the above-described cation-exchange membrane.

Accordingly, the description of the disclosure and the invention is directly applicable to the specific method, the specific apparatus, the specific electrodeposition liquid (cathode liquid), the specific electrodeposition conditions, and the like used in the disclosure.

### 4) Further disclosure

An embodiment of the disclosure is described below in detail with reference to the attached drawings.

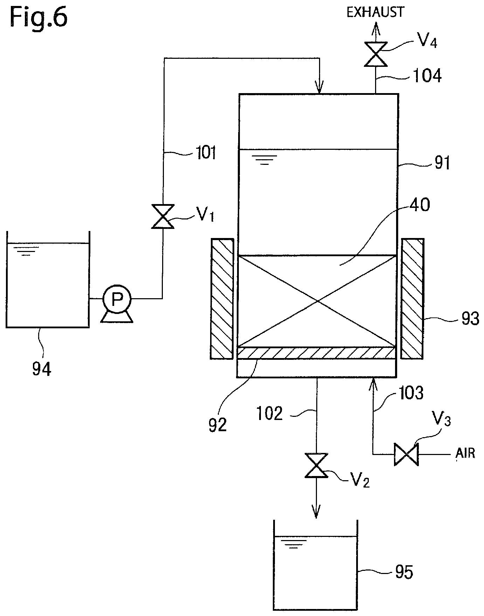

Fig. 6 is a system diagram illustrating an example of an elution apparatus for spent ion-exchange resins according to an embodiment of the disclosure.

In Fig. 6, 91 denotes an eluting bath, which is packed with a spent ion-exchange resin (hereinafter, may be referred to as "waste ion-exchange resin") 40; 92 denotes a liquid-permeable (air-permeable) separation plate that prevents the waste ion-exchange resin 40 from discharging from the eluting bath 91; 93 denotes a heater used for heating an acidic eluent contained in the eluting bath 91; and 94 denotes an acidic-eluent tank. The acidic eluent contained in the acidic-eluent tank 94 is fed to the eluting bath 91 through a pipe 101 provided with a pump P and a valve V₁. The acidic eluent (acidic liquid waste) used for treating the waste ion-exchange resin 40 in the eluting bath 91 is discharged through a pipe 102 provided with a valve V₂. In Fig. 6, 95 denotes an acidic waste liquid tank that stores the acidic liquid waste discharged from the eluting bath 91; 103 denotes a pipe provided with a valve V₃, through which air is introduced to the eluting bath 91 in order to perform agitation; and 104 denotes an exhaust pipe provided with a valve V₄.

The treatment of the waste ion-exchange resin according to the disclosure is performed in the following manner. First, the waste ion-exchange resin 40 is charged into the eluting bath 91. Subsequently, with the valves V₁ and V₄ opened and the valves V₂ and V₃ closed, the pump P is actuated to feed the acidic eluent stored in the acidic-eluent tank 94 to the eluting bath 91 through the pipe 101 at a predetermined flow rate. The acidic eluent may be heated before being fed to the eluting bath 91. Alternatively, an acidic eluent having normal temperature may also be fed to the eluting bath 91. Subsequently, the pump P is stopped and the valve V₁ is closed. Then, while heating is performed with the heater 93, the valve V₃ is opened to introduce air from the bottom of the eluting bath 91 in order to mix the waste ion-exchange resin 40 with the acidic eluent inside the eluting bath 91 by gas agitation (agitation step).

After the waste ion-exchange resin 40 has been mixed with the acidic eluent for a predetermined amount of time by agitation, the valves V₃ and V₄ are closed to stop the introduction of air, and heating with the heater is stopped. Subsequently, the valve V₂ is opened to discharge the acidic eluent contained in the eluting bath 91 to the acidic waste liquid tank 95 through the pipe 102, while the valve V₁ is opened and the pump P is actuated to pass the acidic eluent stored in the acidic-eluent tank 94 though the eluting bath 91 downwardly via the pipe 101 (liquid-feed step). After the acidic eluent has been passed through the eluting bath 91 for a predetermined amount of time, the valves V₁ and V₂ are closed and the pump P is stopped to stop the feeding of the acidic eluent, and the treatment of the waste ion-exchange resin 40 is terminated.

Carrying out the agitation step enables 90% or more of the amount of metal ions adsorbed on the waste ion-exchange resin 40 to be removed by elution. Furthermore, the crud particles can also be removed by dissolution. However, it is not possible to remove the metal ions adsorbed on the waste ion-exchange resin in the agitation step after the equilibrium concentration of the acidic eluent is reached. Carrying out the liquid-feed step after most of the metal ions adsorbed on the waste ion-exchange resin 40 have been roughly removed in the agitation step makes it possible to remove the metal ions adsorbed on the waste ion-exchange resin 40 by elution to a considerably low level.

### <Waste Ion-Exchange Resin>

The waste ion-exchange resin that is to be treated in the disclosure is a spent ion-exchange resin that contains metal ions adsorbed thereon and crud particles composed primarily of an iron oxide (the term "composed primarily of an iron oxide" used herein refers to the crud particles containing iron oxide at a proportion of 50% by weight or more). The waste ion-exchange resin may be provided in a powder-like form (average particle size: the particle size corresponding to an integration value of 50% in the particle size distribution of the waste ion-exchange resin prepared by laser diffraction-scattering is about 10 to 200 µm in a swollen state) or a particulate form (the average particle size of the waste ion-exchange resin determined in accordance with DIAION Manual of Ion Exchange Resins and Synthetic Adsorbent [1], fourth edition, Chapter III, Section 7 (4) "Method for Calculating Average Diameter" is about 300 to 1180 µm (50 to 14 meshes)). The waste ion-exchange resin may be any ion-exchange resin that contains metal ions adsorbed thereon which are capable of being eluted as cations when brought into contact with the acidic eluent. The waste ion-exchange resin may be a cation-exchange resin only or a mixture of a cation-exchange resin and an anion-exchange resin.

The disclosure is particularly suitably applied to the treatment of waste ion-exchange resins containing radioactive metals (e.g., cobalt-60 (⁶⁰Co) and nickel-63 (⁶³Ni)) adsorbed thereon, such as ion-exchange resins spent in nuclear power plants (e.g., an ion-exchange resin used for cleaning a cooling water system that comes into direct contact with a fuel rod and contains radioactive substances, such as a reactor water clean-up system (CUW) or a fuel pool cooling and clean-up system (FPC) and an ion-exchange resin used for removing radioactive metal ions from an acidic liquid waste produced by dissolving, with an acid, radioactive substances removed from surfaces of the metal members constituting devices or pipes included in a primary cooling system used in a nuclear power plant or systems including them which are contaminated with the radioactive substance).

In CUWs and FPCs, powder-like resin mixtures containing a cation-exchange resin and an anion-exchange resin are commonly used. Such powder-like resin mixtures typically contain a fibrous filter aid composed of cellulose or an acrylic material in order to limit an increase in the pressure difference resulting from the conduction of the liquid. It is suitable to add the fibrous filter aid to the waste ion-exchange resin in order to reduce the likelihood of the pressure difference being increased when the acidic eluent is passed through the waste ion-exchange resin in the liquid-feed step in the disclosure. The amount of radioactive substances adsorbed on the waste ion-exchange resin and the content of crud particles in the waste ion-exchange resin are not limited.

### <Acidic Eluent>

The acidic eluent may be an aqueous solution of an inorganic acid, such as sulfuric acid, hydrochloric acid, or nitric acid, or an organic acid, such as formic acid, acetic acid, or oxalic acid. The above acids may be used alone or in a mixture of two or more. It is preferable to use sulfuric acid and/or oxalic acid, which are less volatile even when heated at the temperature described below and are not considered to be dangerous substances.

A suitable acid concentration in the acidic eluent varies with the type of the acid used. The concentration of sulfuric acid in the acidic eluent is preferably 3% to 40% by weight and is more preferably 5% to 30% by weight. The concentration of oxalic acid in the acidic eluent is preferably 0.1% to 40% by weight and is more preferably 1% to 20% by weight. If the acid concentration is lower than the above range, the efficiency with which the primary component of the crud particles, that is, hematite (α-Fe₂O₃), dissolves in the acidic eluent may be reduced. Since the crud particles are mixed in the waste ion-exchange resin or buried in particles of the resin and are composed mainly of hardly soluble hematite, it is difficult to dissolve the crud particles in an acidic eluent having a low acid concentration. If the acid concentration in the acidic eluent is high, an excessively large amount of hydrogen is produced in the subsequent regeneration treatment of the acidic liquid waste, which reduces the electrodeposition efficiency.

### <Separation Plate>

As described above, the ion-exchange resins included in the reactor water clean-up systems and the fuel pool cooling and clean-up systems are commonly powder-like resins having an average particle size of about 10 to 200 µm in a swollen state. In the case where such a powder-like resin is treated, it is difficult to block the leakage of the ion-exchange resin with a slit-like separation plate that is commonly used in ion-exchange columns. Accordingly, the separation plate 92 is preferably a porous plastic plate, such as a sintered plastic plate. When the separation plate 92 is a porous plastic plate, the separation plate 92 may serve also as a diffuser plate for gas agitation.

The separation plate 92 is required to be resistant to acids, heat, and radiation. Examples of a material for the separation plate 92 include resins resistant to radiation, such as a fluororesin (e.g., ETFE), a high-density polyethylene, an ultra-high-molecular-weight polyethylene, and polypropylene. The average pore size of the separation plate 92 is preferably 1 to 20 µm and is more preferably 2 to 10 µm in order to reduce the leakage of the powder-like resin and to prevent an excessive increase in the pressure difference which may occur during aeration.

In Fig. 6, the separation plate 92 is disposed at the lower portion of the eluting bath 91 since the liquid is passed through the eluting bath 91 downwardly in the liquid-feed step. In the case where the liquid is passed through the eluting bath 91 upwardly, the separation plate is disposed at the upper portion of the eluting bath 91.

### <Agitation Step>

The amount of acidic eluent used in the agitation step is preferably 1.5 to 20 times and is further preferably 2 to 10 times the spontaneous sedimentation volume (i.e., the volume of particles of the waste ion-exchange resin which become settled when a liquid mixture of the waste ion-exchange resin and the eluent is charged into a graduated cylinder and left to stand for 12 hours. When the waste ion-exchange resin contains additional materials, such as the filter aid, the term "spontaneous sedimentation volume" refers to the volume of the entirety of the waste ion-exchange resin that includes the additional materials. The same applies hereinafter) of the waste ion-exchange resin 40 charged in the eluting bath 91. If the amount of acidic eluent used in the agitation step is excessively small, the elution of metal ions and the dissolution of crud particles may fail to be performed to a sufficient degree. If the amount of acidic eluent used in the agitation step is excessively large, the advantageous effects appropriate to the large amount of acidic eluent used are not achieved and the size of the eluting bath is increased disadvantageously.

In the agitation step, agitation is preferably performed by introducing a gas into the eluting bath 91, that is, by gas agitation. This is because a mixed slurry containing the waste ion-exchange resin 40 and the acidic eluent, which is formed as a result of mixing the waste ion-exchange resin 40 and the acidic eluent with each other, has a high viscosity and performing mechanical agitation is likely to cause troubles. Since the eluting bath 91 has a high dose rate, the amount of maintenance works needs to be minimized. Gas agitation is also preferably used in this regard.

The flow rate of the gas used for gas agitation may be set such that the waste ion-exchange resin 40 and the acidic eluent can be sufficiently mixed with each other by agitation in the eluting bath 91. The flow rate of the gas required for gas agitation varies with the amount of waste ion-exchange resin 40, the size of the eluting bath 91, and the like. In general, amount of gas (NL) used for gas agitation per minute is preferably 0.2 to 5 times and is more preferably 0.5 to 2 times the spontaneous sedimentation volume (L-resin) of the waste ion-exchange resin 40. The flow rate of the gas used for gas agitation is preferably 0.2 to 5 NL/(min·L-R) and is further preferably 0.5 to 2 NL/(min·L-R).

When the separation plate is a porous plastic plate, the separation plate serves also as a diffuser plate used for diffusing the gas into the eluting bath.

The heating temperature in the agitation step is preferably a temperature at which the temperature of the acidic eluent contained in the eluting bath 91 reaches 60°C or more, more preferably 70°C to 120°C, or particularly preferably 80°C to 100°C. If the heating temperature is excessively low, the efficiency of dissolution of the crud particles may be reduced. If the heating temperature is excessively high, the amount of water evaporated and the amount of acid volatilized may be increased to an excessive degree, which degrades the workability.

The amount of time during which the treatment is performed in the agitation step is preferably about 0.5 to 24 hr and is particularly preferably about 2 to 12 hr. If the amount of treatment time is excessively small, the elution of metal ions and the dissolution of crud particles may fail to be performed to a sufficient degree. If the amount of treatment time is excessively large, the advantageous effects appropriate to the large amount of treatment time are not achieved and the amount of treatment time is increased disadvantageously.

The agitation step may be carried out in two or more stages by, for example, after the predetermined amount of acidic eluent fed to the eluting bath packed with the waste ion-exchange resin has been stirred while being heated under predetermined conditions, discharging the acidic eluent from the eluting bath, subsequently feeding a predetermined amount of acidic eluent to the eluting bath, and performing stirring while being heated under predetermined conditions. In such a case, it is preferable to set the amount of acidic eluent used and the amount of agitation time per stage to be smaller than the preferable conditions described above such that the total amount of acidic eluent used in the plural stages of the agitation step and the total amount of time during which agitation is performed in the plural stages of the agitation step satisfy the preferable conditions described above.

### <Liquid-Feed Step>

The acidic eluent passed through the eluting bath 91 in the liquid-feed step subsequent to the above agitation step may have normal temperature (about 10°C to 30°C). Passing an acidic eluent having normal temperature through the eluting bath 91 reduces the degradation of cation-exchange membranes which may occur in the regeneration of the acidic liquid waste, which is described below. As described below, the acidic liquid waste discharged as a result of the elution treatment of the waste ion-exchange resin is subjected to a regeneration treatment in which the permeation of metal ions through cation-exchange membranes is utilized. If the acidic liquid waste brought into contact with the cation-exchange membranes in the regeneration treatment has a high temperature, the cation-exchange membranes may become degraded by heat. Therefore, in PTL 6, an acidic liquid waste having a high temperature is cooled with a heat exchanger before being subjected to the regeneration treatment. In the fourth invention, an acidic eluent having normal temperature is passed through the eluting bath 91 in the liquid-feed step, and the acidic liquid waste having a high temperature which is produced in the agitation step and the acidic liquid waste having normal temperature which is discharged from the eluting bath 91 in the liquid-feed step are stored in the acidic waste liquid tank 95. This enables the temperature of the acidic liquid waste stored in the acidic waste liquid tank 95 to be limited to be 50°C or less or preferably 40°C or less, at which the degradation of the cation-exchange membranes does not occur and eliminates the need to use a heat exchanger for cooling the acidic liquid waste. In another case, the temperature-cycle load may be reduced.

The amount of acidic eluent passed through the eluting bath 91 in the liquid-feed step and the amount of time during which the acidic eluent is passed through the eluting bath 91 in the liquid-feed step are not limited and may be set such that the metal ions adsorbed on the waste ion-exchange resin 40 are sufficiently removed by elution. The amount of acidic eluent passed through the eluting bath 91 may be set, but is not limited, to 5 to 20 times the spontaneous sedimentation volume of the waste ion-exchange resin 40 charged in the eluting bath 91.

The SV at which the acidic eluent is passed through the eluting bath 91 is preferably 0.2 to 30 hr⁻¹ and is more preferably 1 to 10 hr⁻¹ with respect to the spontaneous sedimentation volume of the waste ion-exchange resin 40 charged in the eluting bath 91, because an excessively low SV of the acidic eluent reduces the treatment efficiency and an excessively high SV of the acidic eluent reduces the elution efficiency.

The concentration of the metal ions that are to be removed by elution in the acidic eluent used in the agitation step and the liquid-feed step or, in particular, in the acidic eluent used in the liquid-feed step is preferably 20 µg/L or less in order to increase the efficiency at which the metal ions adsorbed on the waste ion-exchange resin are removed by elution while the acidic eluent is passed through the eluting bath 91.

### <Decontamination of Waste Ion-Exchange Resin and Regeneration Treatment>

The acidic liquid waste produced in the above agitation step and the liquid-feed step contains the metal ions eluted from the waste ion-exchange resin and the crud particles removed from the waste ion-exchange resin by dissolution. It is preferable to remove the cationic radioactive substances and iron ions resulting from the crud particles from the acidic liquid waste by introducing the acidic liquid waste to an electrodeposition bath that includes an anode and a cathode and applying a voltage between the anode and the cathode of the electrodeposition bath to cause the cationic radioactive substances and the iron ions to be electrodeposited on the cathode and to subsequently reuse the treated liquid as an acidic eluent.

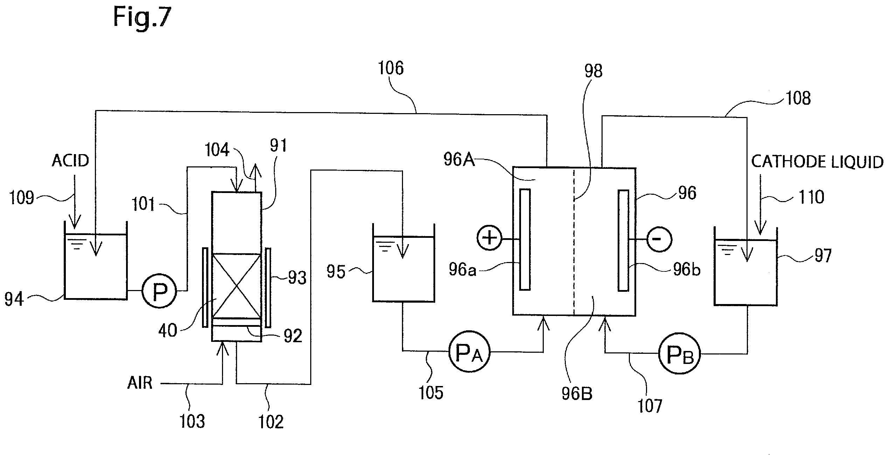

An example of an apparatus for decontaminating an radioactive waste ion-exchange resin and regenerating the acidic liquid waste produced in the decontamination treatment by electrodeposition in order to reuse the acidic liquid waste according to the disclosure is described below with reference to Fig. 7. In Fig. 7, members having the same function as in Fig. 6 are denoted by the same reference numeral. In Fig. 7, valves V₁ to V₄ are not illustrated.

The apparatus illustrated in Fig. 7 includes an acidic-eluent tank 94 that stores an acidic eluent, an eluting bath 91 that is a column packed with a waste ion-exchange resin 40 (the eluting bath 91 is provided with a separation plate 92 disposed at the lower portion of the eluting bath 91 and a heater 93 disposed in the periphery of the eluting bath 91), an acidic waste liquid tank 95 that stores an acidic liquid waste discharged from the eluting bath 91, an electrodeposition bath 96 to which the acidic liquid waste stored in the acidic waste liquid tank 95 is introduced, and a cathode liquid tank 97 that stores a cathode liquid fed to the electrodeposition bath 96. The electrodeposition bath 96 includes an anode chamber 96A provided with an anode 96a, a cathode chamber 96B provided with a cathode 96b, and a cation-exchange membrane 98 that separates the anode chamber 96A and the cathode chamber 96B from each other. The acidic liquid waste is passed through the anode chamber 96A, while the cathode liquid is passed through the cathode chamber 96B.

The decontamination treatment of the waste ion-exchange resin 40 in the eluting bath 91 is performed by the agitation step and the liquid-feed step described above. The acidic waste liquid tank 95 stores an acidic liquid waste produced in the agitation step and an acidic liquid waste produced in the liquid-feed step.

The acidic liquid waste stored in the acidic waste liquid tank 95 is introduced to the anode chamber 96A of the electrodeposition bath 96 through a pipe 105 with a pump P_{A}. The acidic liquid waste treated by electrodeposition is returned to the acidic-eluent tank 94 through a pipe 106 and reused as an acidic eluent.

The cathode liquid stored in cathode liquid tank 97 is introduced to the cathode chamber 96B of the electrodeposition bath 96 through a pipe 107 with a pump P_{B} and returned to the cathode liquid tank 97 through a pipe 108.

The acidic-eluent tank 1 is supplied with an acid through a pipe 109 as needed. The cathode liquid tank 97 is supplied with the cathode liquid through a pipe 110 as needed.

Upon a voltage being applied between the anode 96a and the cathode 96b of the electrodeposition bath 96, radioactive metal ions and iron ions resulting from crud particles that are contained in the acidic liquid waste introduced from the acidic waste liquid tank 95 to the anode chamber 96A of the electrodeposition bath 96 are caused to permeate through the cation-exchange membrane 98, migrate into cathode chamber 96B, and to be electrodeposited on the cathode 96b. The treated liquid produced by removing the radioactive metal ions and the iron ions from the acidic liquid waste in the electrodeposition bath 96 is returned to the acidic-eluent tank 94 and reused.

The cathode liquid contained in the cathode chamber 96B is circulated through the cathode liquid tank 97 with the pump P_{B} and reused while a certain amount of cathode liquid which is equal to the reduction in the amount of cathode liquid is added to the cathode liquid tank 97.

The pH of the cathode liquid is preferably 1 to 9 and is particularly preferably 2 to 8. If the pH of the cathode liquid is excessively low, the metals electrodeposited on the cathode may disadvantageously become redissolved in the liquid, which reduces the electrodeposition rate. If the pH of the cathode liquid is excessively high, hydroxides of metals are likely to be formed in the liquid in the form of suspended solids. Accordingly, when the pH of the cathode liquid falls outside the above range, it is preferable to adjust the pH of the cathode liquid to be an adequate level with an alkali or an acid.

The cathode liquid preferably contains a ligand capable of forming a complex with metal ions permeated through the cation-exchange membrane. In order to form such a ligand, it is preferable to add, to the cathode liquid, a complexing agent capable of forming a complex with the metal ions.

Examples of the complexing agent are the (salts of) dicarboxylic acids and the (salts of) tricarboxylic acids described above as examples of the complexing agent of the above disclosure. Preferable examples of the complexing agent are the same as in the above disclosure (1).

In the case where the acidic liquid waste contains plural types of metal ions, it is preferable to use an ammonium salt in addition to the (salts of) dicarboxylic acids and/or the (salts of) tricarboxylic acids for the same reasons as in the above disclosure. Examples of the ammonium salt are the same as those shown in the above disclosure (1) as examples. Preferable examples of the ammonium salt are also the same as in the first example.

The concentration of the complexing agent in the cathode liquid, the concentration of the ammonium salt in the cathode liquid, the electrodeposition conditions (e.g., amount of current, current density, and temperature), and the like may be set also as in the disclosure (1).

In the apparatus illustrated in Fig. 7, substances that form metal cations when dissolved, such as cobalt-60 and nickel-63 contained in the radioactive waste ion-exchange resin, are caused to be electrodeposited on the cathode. This enables the radioactive substances to be concentrated at a high level. This also reduces the dose rate of the waste ion-exchange resin to a considerably low level. The treated waste ion-exchange resin can be incinerated. Incinerating the waste ion-exchange resin to produce incineration ash reduces the volume of the waste to 1/100 to 1/200 the initial volume.

While the electrodeposition bath 96 included in the apparatus illustrated in Fig. 7 has a closed system, the electrodeposition bath preferably has an open system in which the upper portion of the electrodeposition bath is opened, because a hydrogen gas is generated on the cathode. Opening the upper portion of the electrodeposition bath also facilitates the replacement of a cathode on which metals are electrodeposited. In the electrodeposition bath 96, the acidic liquid waste and the cathode liquid may be passed through the respective chambers in the directions opposite to each other across the cation-exchange membrane 98.

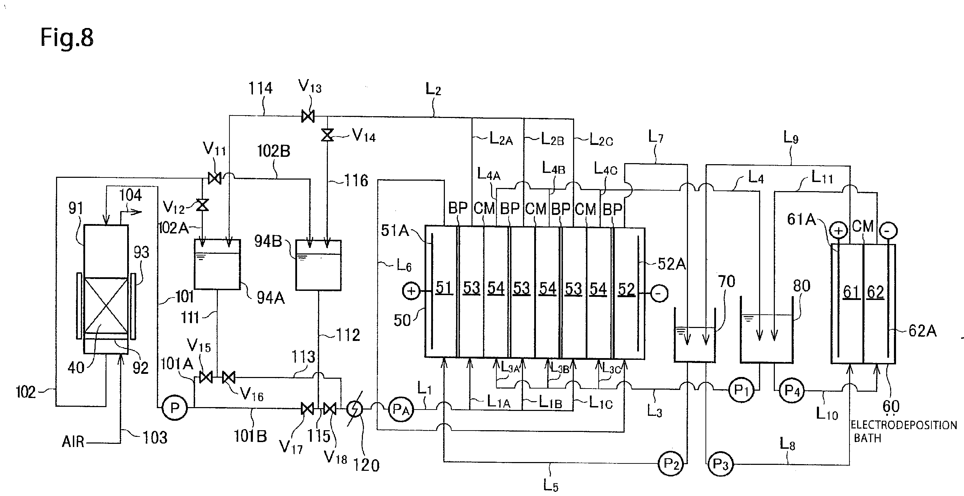

Fig. 8 is a system diagram illustrating another example of an apparatus for decontaminating a radioactive waste ion-exchange resin and performing the regeneration treatment according to the embodiment.

While the permeation of metal ions through the cation-exchange membrane and the electrodeposition of metal ions are performed with a single bath, that is, the electrodeposition bath 96, in the decontamination and regeneration apparatus illustrated in Fig. 7, the decontamination and regeneration apparatus illustrated in Fig. 8 includes an electrodialysis bath 50 and an electrodeposition bath 96. The permeation of the metal ions through the cation-exchange membrane is performed in the electrodialysis bath 50. The electrodeposition of metal ions is performed in the electrodeposition bath 96. The electrodialysis bath 50 includes plural cation-exchange membranes in order to increase the treatment efficiency. The decontamination and regeneration apparatus illustrated in Fig. 8 further includes two acidic-eluent tanks, that is, a first acidic-eluent tank 94A and a second acidic-eluent tank 94B and performs a continuous treatment by using the two acidic-eluent tanks as an acidic-eluent tank and an acidic waste liquid tank in an alternating manner.

In Fig. 8, members having the same function as in Fig. 6 are denoted by the same reference numeral.

While the decontamination of a waste ion-exchange resin 40 in an eluting bath 91 is performed by the agitation step and the liquid-feed step described above, the treatment is performed continuously by switching the first acidic-eluent tank 94A with the second acidic-eluent tank 94B.

First, an acidic eluent is charged to the first acidic-eluent tank 94A (the second acidic-eluent tank 94B is empty). Subsequently, a valve V₁₅ is opened and a pump P is actuated to feed a certain amount of acidic eluent required in the agitation step is fed from the first acidic-eluent tank 94A to the eluting bath 91 through pipes 111, 101A, and 101. After the certain amount of acidic eluent has been fed to the eluting bath 91, the pump P is stopped and the valve V₁₅ is closed. Subsequently, air is introduced through a pipe 103 while heating is performed with a heater 93 in order to carry out the agitation step. After the agitation step has been terminated, a valve V₁₁ and the valve V₁₅ are opened and the pump P is actuated to discharge an acidic liquid waste from the eluting bath 91 to the second acidic-eluent tank 94B through pipes 102 and 102B, while the acidic eluent stored in the first acidic-eluent tank 94A is passed through the eluting bath 91 in order to carry out the liquid-feed step. The liquid-feed step is terminated when substantially the whole amount of acidic eluent stored in the first acidic-eluent tank 94A has been discharged; a small amount of acidic eluent is left in the first acidic-eluent tank 94A in order to prevent air entrainment in the pump P.

Subsequent to the liquid-feed step, valves V₁₈ and V₁₄ are opened and the pump P_{A} is actuated (pumps P₂ and P₃ are also actuated and a voltage is applied across the electrodialysis bath 50 and the electrodeposition bath 60) to feed the acidic liquid waste stored in the first acidic-eluent tank 94A to the electrodialysis bath 50 through pipes 112, 115, and L₁. A liquid produced by removing metal ions from the acidic liquid waste by performing electrodialysis in the electrodialysis bath 50 is returned to the second acidic-eluent tank 94B through pipes L₂ and 116. The above-described step may be started after the liquid-feed step has been terminated. The above-described step may alternatively be started after a certain amount of acidic eluent has been stored in the second acidic-eluent tank 94B in the liquid-feed step in which the acidic eluent stored in the first acidic-eluent tank 94A is passed through the eluting bath 91, that is, before the acidic eluent stored in the first acidic-eluent tank 94A becomes depleted, simultaneously with the liquid-feed step.

After the regeneration of the acidic liquid waste stored in the second acidic-eluent tank 94B has been performed for a predetermined amount of time, the application of a voltage across the electrodialysis bath 50 and the electrodeposition bath 60 is stopped, the valves V₁₈ and V₁₄ are closed, and the pumps P_{A}, P₂, and P₃ are stopped to terminate the regeneration of the liquid stored in the second acidic-eluent tank 94B. The amount of time during which the regeneration treatment is performed is set to the amount of time required for reducing the concentration of metal ions in the liquid to a level at which the acidic liquid waste can be reused as an acidic eluent (as described above, this metal-ion concentration is 20 µg/L or less).

In the electrodeposition bath 60, metals are electrodeposited on the cathode 62A. It is preferable to remove the electrodeposition liquid from the electrodeposition bath 60 (at least from the cathode chamber 62 of the electrodeposition bath 60) before the application of the voltage is stopped. If the cathode chamber 62 is filled with the electrodeposition liquid while the application of the voltage across the electrodeposition bath 60 is stopped, the metals electrodeposited on the cathode may disadvantageously become redissolved in the liquid.

After the above liquid-feed step has been terminated, the decontaminated ion-exchange resin is removed from the eluting bath 91 and an untreated waste ion-exchange resin is charged into the eluting bath 91. In the case where the ion-exchange resin charged in the eluting bath 91 has not been decontaminated to a sufficient degree, the replacement of the waste ion-exchange resin may be omitted. In such a case, the ion-exchange resin is subjected to the next decontamination treatment with the acidic eluent stored in the second acidic-eluent tank 94B.

Subsequently, the agitation step and the liquid-feed step are performed in the above-described manner by feeding the regenerated acidic eluent stored in the second acidic-eluent tank 94B to the eluting bath 91. The effluent of the eluting bath 91 is fed to the first acidic-eluent tank 94A, and the acidic liquid waste stored in the first acidic-eluent tank 94A is regenerated by the electrodeposition treatment.

A valve V₁₇ is opened and the pump P is actuated to feed a certain amount of acidic eluent required in the agitation step is fed from the second acidic-eluent tank 94B to the eluting bath 91 through pipes 112, 101B, and 101. After the certain amount of acidic eluent has been fed to the eluting bath 91, the pump P is stopped and the valve V₁₇ is closed. Subsequently, air is introduced through the pipe 103 while heating is performed with the heater 93 in order to carry out the agitation step. After the agitation step has been terminated, a valve V₁₂ and the valve V₁₇ are opened and the pump P is actuated to discharge an acidic liquid waste from the eluting bath 91 to the first acidic-eluent tank 94A through pipes 102 and 102A, while the acidic eluent stored in the second acidic-eluent tank 94B is passed through the eluting bath 91 in order to carry out the liquid-feed step. The liquid-feed step is terminated when substantially the whole amount of acidic eluent stored in the second acidic-eluent tank 94B has been discharged; a small amount of acidic eluent is left in the second acidic-eluent tank 94B in order to prevent air entrainment in the pump P.

Subsequent to the liquid-feed step, valves V₁₆ and V₁₃ are opened and the pump P_{A} is actuated (pumps P₂ and P₃ are also actuated and a voltage is applied across the electrodialysis bath 50 and the electrodeposition bath 60) to feed the acidic liquid waste stored in the first acidic-eluent tank 94A to the electrodialysis bath 50 through pipes 111, 113, and L₁. A liquid produced by removing metal ions from the acidic liquid waste by performing electrodialysis in the electrodialysis bath 50 is returned to the first acidic-eluent tank 94A through pipes L₂ and 114. The above-described step may be started after the liquid-feed step has been terminated. The above-described step may alternatively be started after a certain amount of acidic eluent has been stored in the first acidic-eluent tank 94A in the liquid-feed step in which the acidic eluent stored in the second acidic-eluent tank 94B is passed through the eluting bath 91, that is, before the acidic eluent stored in the second acidic-eluent tank 94B becomes depleted, simultaneously with the liquid-feed step.

After the regeneration of the acidic liquid waste stored in the first acidic-eluent tank 94A has been performed for a predetermined amount of time, the application of a voltage across the electrodialysis bath 50 and the electrodeposition bath 96 is stopped, the valves V₁₆ and V₁₃ are closed, and the pumps P_{A}, P₂, and P₃ are stopped to terminate the regeneration of the liquid stored in the second acidic-eluent tank 94B.

When the liquid-feed step, in which the acidic eluent stored in the first acidic-eluent tank 94A or the second acidic-eluent tank 94B is passed through the eluting bath 91, is terminated, the whole amount of acidic liquid waste may be fed to the second acidic-eluent tank 94B or the first acidic-eluent tank 94A by pressing the eluent contained in the acidic-eluent tanks and the eluting bath 91 by a gas, such as air. This minimizes the amount of acidic eluent consumed as a result of the removal of the decontaminated ion-exchange resin in the replacement of the decontaminated ion-exchange resin.

In Fig. 8, 120 denotes a heat exchanger used for cooling the acidic liquid waste fed to the electrodialysis bath 50. The heat exchanger is not necessarily used in the disclosure, because the temperature of the acidic liquid waste can be reduced while an acidic eluent having normal temperature is passed through the eluting bath 91 in the liquid-feed step subsequent to the agitation step, in which a heated acidic eluent is passed through the eluting bath 91.

The structure of the electrodialysis bath 50 is the same as that of the electrodialysis bath 50 according to the invention. In the electrodialysis bath 50, electrodialysis is performed as in the invention.

In the apparatus illustrated in Fig. 8, the acidic liquid waste introduced to the deionization chambers 53 of the electrodialysis bath 50 through pipes L₁, L_{1A}, L_{1B}, and L_{1C} is subjected to electrodialysis in the electrodialysis bath 50 in order to remove metal ions from the acidic liquid waste and returned to the first acidic-eluent tank 94A or the second acidic-eluent tank 94B through pipes L_{2A}, L_{2B}, L_{2C}, and L₂. The treated acidic liquid is reused.

The electrodeposition liquid is introduced from the electrodeposition liquid tank 80 to the concentration chambers 54 of the electrodialysis bath 50 through pipes L₃, L_{3A}, L_{3B}, and L_{3C} with a pump P₁. The electrodeposition liquid that contains the metal ions permeated through the cation-exchange membranes CM and migrated from the deionization chambers 53 into the concentration chambers 54 as a result of the electrodialysis performed in the electrodialysis bath 50 is returned to the electrodeposition liquid tank 80 through pipes L_{4A}, L_{4B}, L_{4C}, and L₄. Since the metal ions contained in the electrodeposition liquid stored in the electrodeposition liquid tank 80 are removed in the electrodeposition bath 60 as described below, an electrodeposition liquid from which the metal ions have been removed is fed to the electrodialysis bath 50.

The electrodeposition liquid may be the same as the cathode liquid used in the apparatus illustrated in Fig. 7.

An electrode liquid containing an electrolyte is passed through the anode chamber 51 and the cathode chamber 52 of the electrodialysis bath 50. It is necessary to select an electrolyte that does not become oxidized on the anode 51A or reduced on the cathode 52A and does not precipitate on the cathode 52A. It is preferable to use sulfuric acid or an alkali metal salt of sulfuric acid as an electrolyte.

The apparatus illustrated in Fig. 8 includes an electrodeposition liquid tank 70 that also contains the anode liquid of the electrodeposition bath 96. The electrode liquid contained in the electrodeposition liquid tank 70 is introduced to the anode chamber 51 of the electrodialysis bath 50 with a pump P₂ through a pipe L₅, subsequently introduced to the cathode chamber 52 through a pipe L₆, and returned to the electrodeposition liquid tank 70 through a pipe L₇ in a circulatory system. The electrode liquid contained in the electrodeposition liquid tank 70 is also introduced to the anode chamber 61 of the electrodeposition bath 96 with a pump P₃ through a pipe L₈ and returned to the electrodeposition liquid tank 70 through a pipe L₉ in a circulatory system. The structure of the electrode liquid tank is not limited to the above one; the electrode liquid tank may be provided for each electrode chamber.

While the electrodialysis bath 50 illustrated in Fig. 8 includes three cation-exchange membranes CM and three deionization chambers 53, the number of the cation-exchange membranes CM is not limited to three and may be two or four or more. The larger the number of the cation-exchange membranes included in the electrodialysis bath, the larger the area of the cation-exchange membranes, the shorter the distance metal ions migrate, and the higher the rate of permeation of the metal ions. An excessively large number of the cation-exchange membranes included in the electrodialysis bath may result in an increase in the resistance of the entire electrodialysis bath, which increases the power consumption and the temperature of the electrodialysis bath. If the temperature of the electrodialysis bath is 40°C or more, the ion-exchange membranes and, in particular, the bipolar membranes BP may become degraded. In the case where the temperature of the electrodialysis bath is increasing, it is preferable to cool the acidic liquid waste, the electrodeposition liquid, or the electrode liquid as needed such that the temperature of the electrodialysis bath does not reach 40°C or more.

While the acidic liquid waste is passed through the deionization chambers 53 in the direction same as the direction in which the electrodeposition liquid is passed through the concentration chambers 54 in Fig. 8, they may be passed through the respective chambers in the direction opposite to each other. The directions in which the electrode liquid is passed through the anode chamber 51 and the cathode chamber 52 are also not limited.

It is preferable to interpose an adequate spacer between each of the pairs of the cation-exchange membrane CM and the bipolar membrane BP included in the electrodialysis bath 50 in order to prevent the blockage of channels which may occur when the adjacent membranes are brought into contact with each other as a result of, for example, the warpage of the membranes. The spacer may have any shape that allows the channels to be maintained; spacers having a net-like shape, a honeycomb shape, a ball-like shape, and the like may be used. The material for the spacer is preferably selected with consideration of the properties of the liquid that is to be passed through the chambers. In the case where the above-described acidic liquid waste is treated, a spacer resistant to acids is selected.

The structure of the electrodeposition bath 96 is the same as that of the electrodeposition bath 60 used in the second invention, and electrodeposition is performed as in the second invention.

The anode liquid used in the electrodeposition bath 96 is, similarly to that used in the electrodialysis bath 50, an electrolyte solution that does not become oxidized on the anode 61A. While the anode liquid used in the electrodeposition bath 96 also serves as an electrode liquid in the electrodialysis bath 50 in Fig. 8, a liquid other than the anode liquid may be used as an electrode liquid in the electrodialysis bath 50.

As in the electrodialysis bath 50, the anode liquid may be passed through the anode chamber 61 in the direction same as the direction in which the electrodeposition liquid is passed through the cathode chamber 62 as illustrated in Fig. 8. The liquids may alternatively be passed through the respective chambers in the direction opposite to each other.

As in the invention, the ion-exchange membranes included in the electrodialysis bath 50, which are each interposed between a specific one of the pairs of adjacent cation-exchange membranes, are not limited to the bipolar membranes and may be hydrogen-permselective cation-exchange membranes.

The electrodialysis bath and the electrodeposition bath are separated from each other as illustrated in Fig. 8. This enables the conditions such as the current density to be changed independently such that the rate of electrodialysis of metal ions in the electrodialysis bath and the rate of electrodeposition of metal ions in the electrodeposition bath are each set to an optimum rate.

The current density in the electrodialysis bath, in which electrodialysis of metal ions is performed, is preferably 10 to 400 mA/cm² and is more preferably 20 to 200 mA/cm² with respect to the area of the cathode regardless whether bipolar membranes are used or hydrogen-permselective cation-exchange membranes are used.

The current density in the electrodeposition bath with respect to the area of the cathode is preferably 5 to 200 mA/cm² and is more preferably 10 to 150 mA/cm².

The electrodialysis bath and electrodeposition bath are separated from each other as illustrated in Fig. 8. This simplifies the structure of the electrodeposition bath and enables the operation for replacing a cathode on which metals precipitated are adhered by electrodeposition to be readily performed without being inhibited by the complex components.

### EXAMPLES

The present invention is described more specifically below with reference to Examples.

### [Examples and Comparative Examples of Invention]

### <Dialysis Test>

The apparatus illustrated in Fig. 4 was used (the number of the cation-exchange membranes used was set as shown in Table 1). A waste acid (acidic liquid waste having a pH of 1.2 which was produced by an elution treatment of a waste ion-exchange resin containing iron rust (α-Fe₂O₃) and cobalt adsorbed thereon with sulfuric acid heated at 90°C) having the composition shown in Table 1 was used as a synthesized liquid waste in this treatment test. During the test, 400 mL of the waste acid stored in a waste acid tank (not illustrated) was circulated through the electrodialysis bath, while 200 mL of the electrodeposition liquid having the composition shown in Table 1 was circulated through the electrodialysis bath and the electrodeposition liquid tank. The electrodeposition liquid was not fed to the electrodeposition bath in order to determine the treatment effect of the electrodialysis bath. During the above treatment, the liquid temperature was set to 30°C.

Table 1 shows the conditions under which the dialysis tests were carried out. In Dialysis test I, only one cation-exchange membrane was interposed between the anode chamber and the cathode chamber that were separated from each other with bipolar membranes. In Dialysis test II, two cation-exchange membranes were interposed between the anode chamber and the cathode chamber that were separated from each other with bipolar membranes such that cation-exchange membranes and a bipolar membrane were alternately arranged in the order of cation-exchange membrane, bipolar membrane, and cation-exchange membrane. In Dialysis test III, four cation-exchange membranes were interposed between the anode chamber and the cathode chamber that were separated from each other with bipolar membranes such that cation-exchange membranes and bipolar membranes were alternately arranged in the order of cation-exchange membrane, bipolar membrane, cation-exchange membrane, bipolar membrane, cation-exchange membrane, bipolar membrane, and cation-exchange membrane.

**[Table 1]**

| Test conditions | | Dialysis test I | Dialysis test I | Dialysis test I |
|---|---|---|---|---|
| Cation-exchange membrane | Brand | SELEMION CMD (produced by AGC Engineering Co., Ltd.) | | |
| | Liquid-contact Area | 55cm² | | |
| | Number of membranes | 1 | 2 | 4 |
| Bipolar membrane | Brand | NEOSEPTA BP-1E (produced by ASTOM Corporation) | | |
| | Liquid-contact Area | 55cm² | | |
| | Number of membranes | 2 | 3 | 5 |
| Synthesized liquid waste | Composition | Sulfuric acid: 5%(525mM), Fe: 3,700mg-Fe/L, Co : 75mg-Co/L | | |
| | Liquid conduction rate | 9.6L/hr (80mL/min) | 19.2L/hr (160mL/min) | 38.4L/hr (320mL/min) |
| | Linear velocity | 5.6cm/sec | | |
| | Amount of liquid | 400mL | | |
| Synthesized liquid waste | Composition | Triammonium citrate 170g/L, pH6.6 | | |
| | Liquid conduction rate | 9.6L/hr (80mL/min) | 19.2L/hr (160mL/min) | 38.4L/hr (320mL/min) |
| | Linear velocity | 5.6cm/sec | | |
| | Amount of liquid | 200mL | | |
| Electrode liquid | Composition | 77g/L Sodium sulfate | | |
| | Liquid conduction rate | 96L/hr(160mL/min, for each of anode and cathode liquids) | | |
| | Linear velocity | 5.6cm/sec | | |
| | Amount of liquid | 400mL | | |
| Current-application time | | 6hr | | |
| Current (current density) | | 3.05A(62.5mA/cm²) or 1.20A(24.6mA/cm²) | | |
| Electrodes | | Anode: Pt-coated Ti plate, cathode: Cu plate (both having an area of 48.8 cm²) | | |

The test conditions employed in Examples II-1 to II-3 and Comparative examples II-1 and II-2 are as follows.
Comparative example II-1: Dialysis test I (current: 1.20 A (24.6 mA/cm²))
Comparative example II-2: Dialysis test I (current: 3.05 A (62.5 mA/cm²))
Example II-1: Dialysis test II (current: 3.05 A (62.5 mA/cm²))
Example II-2: Dialysis test III (current: 1.20 A (24.6 mA/cm²))
Example II-3: Dialysis test III (current: 3.05 A (62.5 mA/cm²))

In Example II-3, the application of current was terminated in three hours, because most of the Co and Fe contained in the synthesized liquid waste had migrated into the electrodeposition liquid after a lapse of three hours of current application.

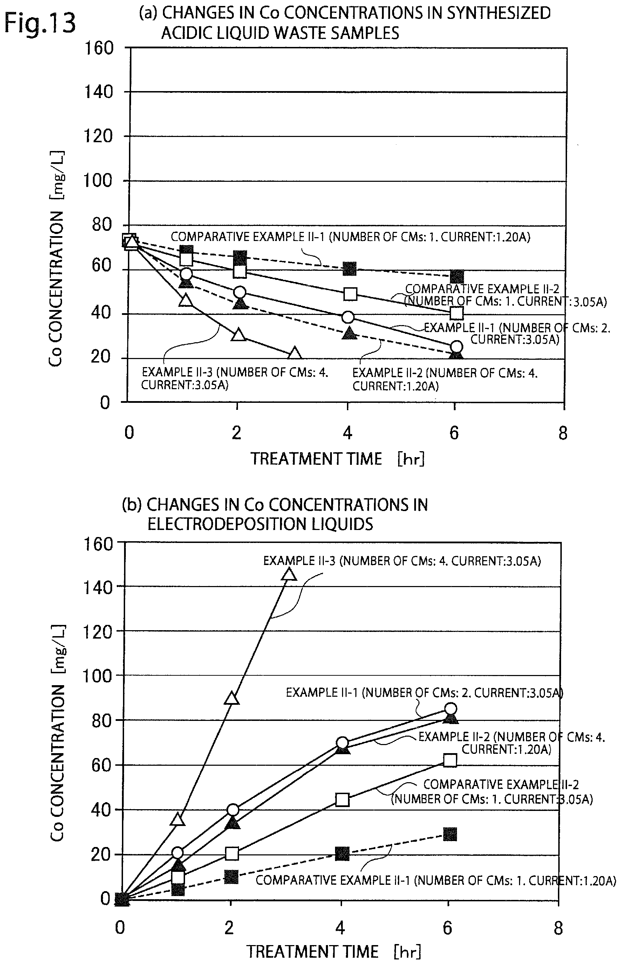

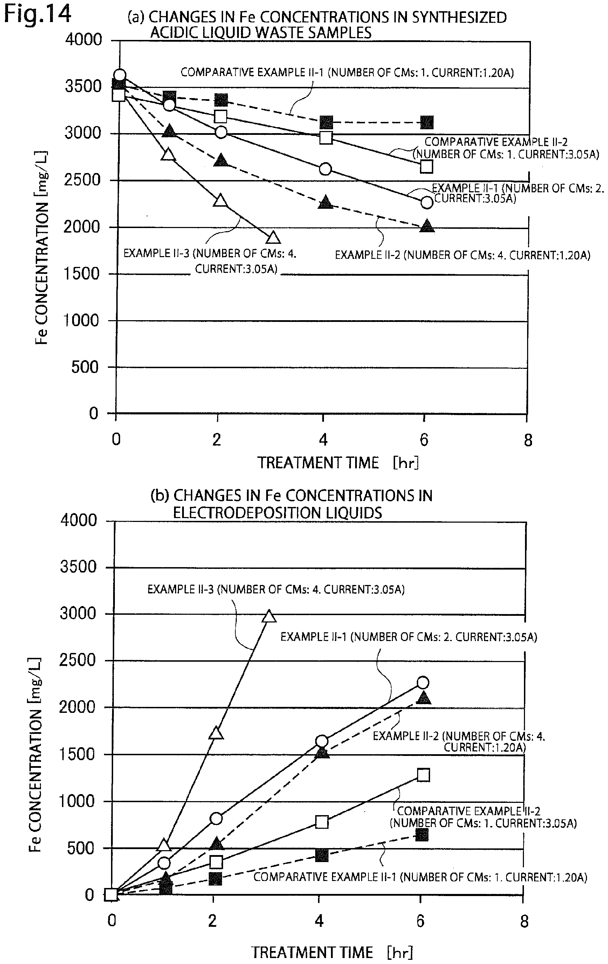

Figs. 13(a) and 13(b) illustrate changes in the Co concentrations in the synthesized liquid waste samples and the electrodeposition liquids, respectively, with time. Figs. 14(a) and 14(b) illustrate changes in the Fe concentrations in the synthesized liquid waste samples and the electrodeposition liquids, respectively, with time.

The results illustrated in Figs. 13 and 14 confirm that, the larger the number of the cation-exchange membranes included in the electrodialysis bath, the higher the rate at which Co and Fe contained in the synthesized liquid waste were migrated into the electrodeposition liquid through the cation-exchange membranes. It is also confirmed that the above rate was further increased when the current density was increased from 24.6 mA/cm² to 62.5 mA/cm².

### <Electrodeposition Test>

The electrodeposition liquids produced by carrying out the dialysis tests for 6 hours (in Example II-3, 3 hours) in Examples II-1 to II-3 and Comparative examples II-1 and II-2 were each subjected to an electrodeposition treatment under the conditions shown in Table 2 while being circulated through the electrodeposition liquid tank and the electrodeposition bath with the pump. It was confirmed that both Fe and Co concentrations in each of the electrodeposition liquids were reduced, by electrodeposition, to be less than 1 mg/L in terms of concentration in the electrodeposition liquid after a lapse of 24 hours of current application. It was also confirmed that, in each of the tests, silver white metallic iron and cobalt were plated on the surface of the cathode used in the test.

**[Table 2]**

| Electrode area | 80cm² |
|---|---|
| Anode | Platinum-plated titanium plate |
| Cathode | Copper plate |
| Current (current density) | 10A(125mA/cm²) |

### Reference Signs List

1, 1A ELECTRODEPOSITION BATH
2 ANODE
2A ANODE CHAMBER
3 CATHODE
3A CATHODE CHAMBER
4 INTERMEDIATE CHAMBER
4A FIRST INTERMEDIATE CHAMBER
4B SECOND INTERMEDIATE CHAMBER
4C THIRD INTERMEDIATE CHAMBER
4D FOURTH INTERMEDIATE CHAMBER
5 CATION-EXCHANGE MEMBRANE
6 BIPOLAR MEMBRANE
8 ELUTING BATH
9A, 9B HEAT EXCHANGER
10 METAL-ION-CONTAINING ACIDIC LIQUID TANK (ACIDIC WASTE LIQUID TANK)
20 CATHODE LIQUID TANK
30 ELUENT TANK
40 WASTE ION-EXCHANGE RESIN
50 ELECTRODIALYSIS BATH
51 ANODE CHAMBER
51A ANODE
52 CATHODE CHAMBER
52A CATHODE
53 DEIONIZATION CHAMBER
54 CONCENTRATION CHAMBER
60 ELECTRODEPOSITION BATH
61 ANODE CHAMBER
61A ANODE
62 CATHODE CHAMBER
62A CATHODE
70 ELECTRODE LIQUID TANK
80 ELECTRODEPOSITION LIQUID TANK
CM CATION-EXCHANGE MEMBRANE
BP BIPOLAR MEMBRANE
CHM HYDROGEN-PERMSELECTIVE CATION-EXCHANGE MEMBRANE
91 ELUTING BATH
92 SEPARATION PLATE
93 HEATER
94,94A,94B ACIDIC-ELUENT TANK
95 ACIDIC WASTE LIQUID TANK
96 ELECTRODEPOSITION BATH
96A ANODE CHAMBER
96a ANODE
96B CATHODE CHAMBER
96b CATHODE
97 CATHODE LIQUID TANK
98 CATION-EXCHANGE MEMBRANE

## Claims

1. A method for treating a liquid containing ions of an iron-group metal, the method comprising: an electrodialysis step in which a liquid containing ions of an iron-group metal and an electrodeposition liquid containing a ligand capable of forming a complex with the ions of an iron-group metal are introduced to an electrodialysis bath (1) including a plurality of cation-exchange membranes (5), and the ions of an iron-group metal are removed from the liquid containing ions of an iron-group metal as a result of the ions of an iron-group metal contained in the liquid containing ions of an iron-group metal being permeated through the cation-exchange membrane (5) and migrated into the electrodeposition liquid;
an electrodeposition step in which an electrodeposition liquid containing the ions of an iron-group metal, the electrodeposition liquid being discharged from the electrodialysis bath (50), is introduced to an electrodeposition bath (60) including an anode and a cathode, and the ions of an iron-group metal are removed from the electrodeposition liquid as a result of the ions of an iron-group metal contained in the electrodeposition liquid being electrodeposited on the cathode; and
an electrodeposition-liquid-circulation step in which an electrodeposition liquid from which the ions of an iron-group metal have been removed in the electrodeposition step is fed to the electrodialysis step.

2. The method for treating a liquid containing ions of an iron-group metal according to Claim 1, wherein the liquid containing ions of an iron-group metal is an acidic decontamination liquid waste having a pH of less than 5 which is produced by a decontamination treatment performed in a nuclear power plant, and wherein the liquid waste from which the ions of an iron-group metal have been removed in the electrodialysis step is reused as a decontamination liquid.

3. The method for treating a liquid containing ions of an iron-group metal according to Claim 1 or 2, wherein the electrodialysis bath includes
an anode and a cathode,
a first bipolar membrane arranged to face the anode,
a second bipolar membrane arranged to face the cathode,
a plurality of cation-exchange membranes interposed between the first and second bipolar membranes, and
one or more third bipolar membranes each interposed between a specific one of adjacent pairs of the cation-exchange membranes,
wherein a space between the anode and the first bipolar membrane serves as an anode chamber, and a space between the cathode and the second bipolar membrane serves as a cathode chamber,
wherein a space between each of the cation-exchange membranes and a specific one of the bipolar membranes which is adjacent to the cation-exchange membrane on a side of the cation-exchange membrane on which the anode is located serves as a deionization chamber, and a space between each of the cation-exchange membranes and a specific one of the bipolar membranes which is adjacent to the cation-exchange membrane on a side of the cation-exchange membrane on which the cathode is located serves as a concentration chamber, and
wherein the liquid containing ions of an iron-group metal is passed through the deionization chamber, while the electrodeposition liquid is passed through the concentration chamber.

4. The method for treating a liquid containing ions of an iron-group metal according to Claim 1 or 2, wherein the electrodialysis bath includes
an anode and a cathode,
a first hydrogen-permselective cation-exchange membrane arranged to face the anode,
a second hydrogen-permselective cation-exchange membrane arranged to face the cathode,
a plurality of cation-exchange membranes interposed between the first and second hydrogen-permselective cation-exchange membranes, and
one or more third hydrogen-permselective cation-exchange membranes each interposed between a specific one of adjacent pairs of the cation-exchange membranes,
wherein a space between the anode and the first hydrogen-permselective cation-exchange membrane serves as an anode chamber and a space between the cathode and the second hydrogen-permselective cation-exchange membrane serves as a cathode chamber,
wherein a space between each of the cation-exchange membranes and a specific one of the hydrogen-permselective cation-exchange membranes which is adjacent to the cation-exchange membrane on a side of the cation-exchange membrane on which the anode is located serves as a deionization chamber, and a space between each of the cation-exchange membranes and a specific one of the hydrogen-permselective cation-exchange membranes which is adjacent to the cation-exchange membrane on a side of the cation-exchange membrane on which the cathode is located serves as a concentration chamber, and
wherein the liquid containing ions of an iron-group metal is passed through the deionization chamber, while the electrodeposition liquid is passed through the concentration chamber.

5. The method for treating a liquid containing ions of an iron-group metal according to any one of Claims 1 to 4, wherein the electrodeposition bath includes
an anode chamber provided with the anode, a cathode chamber provided with the cathode, and a cation-exchange membrane that separates the anode chamber from the cathode chamber, and wherein an electrodeposition liquid containing the ions of an iron-group metal is passed through the cathode chamber.

6. The method for treating a liquid containing ions of an iron-group metal according to Claim 5, wherein an electrodeposition liquid discharged from the cathode chamber of the electrodeposition bath is introduced to the electrodialysis bath via an electrodeposition liquid tank, and an electrodeposition liquid containing the ions of an iron-group metal, the electrodeposition liquid being discharged from the electrodialysis bath, is fed to the cathode chamber of the electrodeposition bath via the electrodeposition liquid tank.

7. The method for treating a liquid containing ions of an iron-group metal according to Claim 5 or 6, wherein an electrode liquid passed through the anode chamber and/or the cathode chamber of the electrodialysis bath is fed to the anode chamber of the electrodeposition bath via an electrode liquid tank, and an anode liquid discharged from the anode chamber of the electrodeposition bath is passed through the anode chamber and/or the cathode chamber of the electrodialysis bath via the electrode liquid tank.

8. An apparatus for treating a liquid containing ions of an iron-group metal, the apparatus comprising:
an electrodialysis device including an electrodialysis bath (50) including an anode chamber (51) provided with an anode, a cathode chamber (52) provided with a cathode, and a plurality of cation-exchange membranes interposed between the anode and cathode chambers, a current-application unit that applies a voltage between the anode and the cathode of the electrodialysis bath (50), and a unit that passes a liquid containing ions of an iron-group metal and an electrodeposition liquid containing a ligand capable of forming a complex with the ions of an iron-group metal through the electrodialysis bath, the electrodialysis device removing the ions of an iron-group metal from the liquid containing ions of an iron-group metal by causing the ions of an iron-group metal contained in the liquid containing ions of an iron-group metal to permeate through the cation-exchange membranes and migrate into the electrodeposition liquid,
an electrodeposition apparatus including an electrodeposition bath (60) including an anode chamber provided with an anode, a cathode chamber provided with a cathode, and a cation-exchange membrane that separates the anode chamber from the cathode chamber, a current-application unit that applies a voltage between the anode and the cathode, and a unit that passes an electrodeposition liquid discharged from the electrodialysis bath, the electrodeposition liquid containing the ions of an iron-group metal, through the cathode chamber of the electrodeposition bath, the electrodeposition apparatus removing the ions of an iron-group metal from the electrodeposition liquid by causing the iron-group metal contained in the electrodeposition liquid containing the ions of an iron-group metal to be electrodeposited on the cathode, and
a unit that feeds an electrodeposition liquid from which the ions of an iron-group metal have been removed, the electrodeposition liquid being discharged from the electrodeposition bath, to the electrodialysis bath.

9. The apparatus for treating a liquid containing ions of an iron-group metal according to Claim 8, wherein the liquid containing ions of an iron-group metal is an acidic decontamination liquid waste having a pH of less than 5 which is produced by a decontamination treatment performed in a nuclear power plant, and wherein the liquid waste from which the ions of an iron-group metal have been removed in the electrodialysis device is reused as a decontamination liquid.

10. The apparatus for treating a liquid containing ions of an iron-group metal according to Claim 8 or 9, wherein the electrodialysis bath includes
an anode and a cathode,
a first bipolar membrane arranged to face the anode,
a second bipolar membrane arranged to face the cathode,
a plurality of cation-exchange membranes interposed between the first and second bipolar membranes, and
one or more third bipolar membranes each interposed between a specific one of adjacent pairs of the cation-exchange membranes,
wherein a space between the anode and the first bipolar membrane serves as an anode chamber, and a space between the cathode and the second bipolar membrane serves as a cathode chamber, and
wherein a space between each of the cation-exchange membranes and a specific one of the bipolar membranes which is adjacent to the cation-exchange membrane on a side of the cation-exchange membrane on which the anode is located serves as a deionization chamber, and a space between each of the cation-exchange membranes and a specific one of the bipolar membranes which is adjacent to the cation-exchange membrane on a side of the cation-exchange membrane on which the cathode is located serves as a concentration chamber,
the apparatus comprising a unit that passes the liquid containing ions of an iron-group metal through the deionization chamber, and
a unit that passes the electrodeposition liquid through the concentration chamber.

11. The apparatus for treating a liquid containing ions of an iron-group metal according to Claim 8 or 9, wherein the electrodialysis bath includes
an anode and a cathode,
a first hydrogen-permselective cation-exchange membrane arranged to face the anode,
a second hydrogen-permselective cation-exchange membrane arranged to face the cathode,
a plurality of cation-exchange membranes interposed between the first and second hydrogen-permselective cation-exchange membranes, and
one or more third hydrogen-permselective cation-exchange membranes each interposed between a specific one of adjacent pairs of the cation-exchange membranes,
wherein a space between the anode and the first hydrogen-permselective cation-exchange membrane serves as an anode chamber, and a space between the cathode and the second hydrogen-permselective cation-exchange membrane serves as a cathode chamber, and
wherein a space between each of the cation-exchange membranes and a specific one of the hydrogen-permselective cation-exchange membranes which is adjacent to the cation-exchange membrane on a side of the cation-exchange membrane on which the anode is located serves as a deionization chamber, and a space between each of the cation-exchange membranes and a specific one of the hydrogen-permselective cation-exchange membranes which is adjacent to the cation-exchange membrane on a side of the cation-exchange membrane on which the cathode is located serves as a concentration chamber,
the apparatus comprising a unit that passes the liquid containing ions of an iron-group metal through the deionization chamber, and
a unit that passes the electrodeposition liquid through the concentration chamber.

12. The apparatus for treating a liquid containing ions of an iron-group metal according to any one of Claims 8 to 11, the apparatus further comprising an electrodeposition liquid tank, a unit that introduces an electrodeposition liquid discharged from the cathode chamber of the electrodeposition bath to the electrodeposition liquid tank, a unit that introduces the electrodeposition liquid stored in the electrodeposition liquid tank to the cathode chamber of the electrodeposition bath, a unit that introduces an electrodeposition liquid discharged from the concentration chamber of the electrodialysis bath to the electrodeposition liquid tank, and a unit that introduces the electrodeposition liquid stored in the electrodeposition liquid tank to the concentration chamber of the electrodialysis bath.

13. The apparatus for treating a liquid containing ions of an iron-group metal according to any one of Claims 8 to 12, the apparatus further comprising an electrode liquid tank, a unit that introduces an anode liquid discharged from the anode chamber of the electrodeposition bath to the electrode liquid tank, a unit that introduces the electrode liquid stored in the electrode liquid to the anode chamber of the electrodeposition bath, a unit that introduces an electrode liquid discharged from the anode chamber and/or cathode chamber of the electrodialysis bath to the electrode liquid tank, and a unit that introduces the electrode liquid stored in the electrode liquid tank to the anode chamber and/or cathode chamber of the electrodialysis bath.

## Patentansprüche

1. Verfahren zum Behandeln einer Flüssigkeit, die Ionen eines Eisengruppenmetalls enthält, wobei das Verfahren enthält: einen Elektrodialyseschritt, worin eine Flüssigkeit mit Ionen aus einem Metall der Eisengruppe und eine Elektroniederschlagsflüssigkeit mit einem Liganden, der einen Komplex mit den Ionen eines Metalls der Eisengruppe bilden kann, in ein Elektrodialysebad (1) eingeführt werden, das eine Vielzahl von Kationenaustauschmembranen (5) enthält und die Ionen des Metalls der Eisengruppe von der Flüssigkeit mit Ionen aus einem Metall der Eisengruppe als Ergebnis entfernt werden, dass die Ionen der Eisengruppe, die in der Flüssigkeit mit Ionen aus einem Metall der Eisengruppe enthalten sind, durch die Kationenaustauschmembran (5) permeieren und in die Elektroniederschlagsflüssigkeit migrieren,
einen Elektroniederschlagsschritt, worin eine Elektroniederschlagsflüssigkeit mit den Ionen eines Metalls der Eisengruppe, wobei die Elektroniederschlagsflüssigkeit von dem Elektrodialysebad (50) abgelassen ist, in ein Elektroniederschlagsbad (60) eingeführt wird, das eine Anode und eine Kathode enthält, und die Ionen eines Metalls der Eisengruppe von der Elektroniederschlagsflüssigkeit als Ergebnis des Elektroniederschlags der Ionen eines Metalls der Eisengruppe, die in der Elektroniederschlagsflüssigkeit enthalten sind, auf der Kathode entfernt werden, und einen Elektroniederschlags-Flüssig-Zirkulationsschritt, worin eine Elektroniederschlagsflüssigkeit, von der die Ionen aus einem Metall der Eisengruppe im Elektroniederschlagsschritt entfernt sind, zum Elektrodialyseschritt geführt wird.

2. Verfahren zum Behandeln einer Flüssigkeit mit Ionen aus einem Metall der Eisengruppe gemäß Anspruch 1, worin die Flüssigkeit mit Ionen aus einem Metall der Eisengruppe ein saurer Dekontaminationsflüssigkeitsabfall mit einem pH von weniger als 5 ist, der durch eine Dekontaminationsbehandlung erzeugt wird, die in einer Nuklearenergieanlage durchgeführt wird, und worin der Flüssigkeitsabfa11, von dem die Ionen eines Metalls der Eisengruppe im Elektrodialyseschritt entfernt sind, als Dekontaminationsflüssigkeit wiederverwendet wird.

3. Verfahren zum Behandeln einer Flüssigkeit mit Ionen aus einem Metall der Eisengruppe gemäß Anspruch 1 oder 2, worin das Elektrodialysebad enthält:
eine Anode und eine Kathode,
eine erste bipolare Membran, die angeordnet ist, so dass sie der Anode gegenüberliegt,
eine zweite bipolare Membran, die angeordnet ist, so dass sie der Kathode gegenüberliegt,
eine Vielzahl von Kationenaustauschmembranen, die zwischen der ersten und der zweiten bipolaren Membran angeordnet sind, und
eine oder mehrere dritte bipolare Membranen, die jeweils zwischen einer spezifischen von benachbarten Paaren der Kationenaustauschmembranen angeordnet sind,
worin ein Raum zwischen der Anode und der ersten bipolaren Membran als Anodenkammer dient und ein Raum zwischen der Kathode und der zweiten bipolaren Membran als Kathodenkammer dient,
worin ein Raum zwischen jeder der Kationenaustauschmembranen und einer spezifischen der bipolaren Membranen, die neben der Kationenaustauschmembran auf einer Seite der Kationenaustauschmembran angeordnet ist, auf der die Anode lokalisiert ist, als Deionisierungskammer dient, und ein Raum zwischen jeder der Kationenaustauschmembranen und einer spezifischen der bipolaren Membranen, die neben der Kationenaustauschmembran auf einer Seite der Kationenaustauschmembran angeordnet ist, auf der die Kathode lokalisiert ist, als Konzentrationskammer dient, und
worin die Flüssigkeit mit Ionen aus einem Metall der Eisengruppe durch die Deionisierungskammer geleitet wird, während die Elektroniederschlagsflüssigkeit durch die Konzentrationskammer geleitet wird.

4. Verfahren zum Behandeln einer Flüssigkeit mit Ionen aus einem Metall der Eisengruppe gemäß Anspruch 1 oder 2, worin das Elektrodialysebad enthält:
eine Anode und eine Kathode,
eine erste Wasserstoff-permselektive Kationenaustauschmembran, die so angeordnet ist, dass sie der Anode gegenüberliegt,
eine zweite Wasserstoff-permselektive Kationenaustauschmembran, die so angeordnet ist, dass sie der Kathode gegenüberliegt,
eine Vielzahl von Kationenaustauschmembranen, die zwischen der ersten und der zweiten Wasserstoff-permselektiven Kationenaustauschmembran angeordnet ist und
eine oder mehrere dritte Wasserstoff-permselektive Kationenaustauschmembranen, die jeweils zwischen einem spezifischen von benachbarten Paaren der Kationenaustauschmembranen angeordnet ist,
worin ein Raum zwischen der Anode und der ersten Wasserstoff-permselektiven Kationenaustauschmembran als Anodenkammer dient und ein Raum zwischen der Kathode und der zweiten Wasserstoff-permselektiven Kationenaustauschmembran als Kathodenkammer dient,
worin ein Raum zwischen jeder der Kationenaustauschmembranen und einer spezifischen der Wasserstoff-permselektiven Kationenaustauschmembranen, die neben der Kationenaustauschmembran auf einer Seite der Kationenaustauschmembran angeordnet ist, auf der die Anode lokalisiert ist, als Deionisierungskammer dient, und ein Raum zwischen einer jeden der Kationenaustauschmembranen und einer spezifischen der Wasserstoff-permselektiven Kationenaustauschmembranen, die neben der Kationenaustauschmembran auf einer Seite der Kationenaustauschmembran angeordnet ist, auf der die Kathode lokalisiert ist, als Konzentrationskammer dient, und
worin die Flüssigkeit mit Ionen aus einem Metall der Eisengruppe durch die Deionisierungskammer geleitet wird, während die Elektroniederschlagsflüssigkeit durch die Konzentrationskammer geleitet wird.

5. Verfahren zum Behandeln einer Flüssigkeit mit Ionen aus einem Metall der Eisengruppe gemäß einem der Ansprüche 1 bis 4, worin das Elektroniederschlagsbad eine Anodenkammer, die mit der Anode versehen ist, eine Kathodenkammer, die mit der Kathode versehen ist, und eine Kationenaustauschmembran enthält, die die Anodenkammer von der Kathodenkammer trennt und worin eine Elektroniederschlagsflüssigkeit mit den Ionen eines Metalls der Eisengruppe durch die Kathodenkammer geleitet wird.

6. Verfahren zum Behandeln einer Flüssigkeit mit Ionen aus einem Metall der Eisengruppe gemäß Anspruch 5, worin eine Elektroniederschlagsflüssigkeit, die von der Kathodenkammer des Elektroniederschlagsbads abgelassen wird, zu dem Elektrodialysebad über einen Elektroniederschlags-Flüssigkeitstank eingeführt wird und eine Elektroniederschlagsflüssigkeit mit den Ionen eines Metalls der Eisengruppe, wobei die Elektroniederschlagsflüssigkeit von dem Elektrodialysebad abgelassen wird, zu der Kathodenkammer des Elektroniederschlagsbads über den Elektroniederschlags-Flüssigtank geführt wird.

7. Verfahren zum Behandeln einer Flüssigkeit mit Ionen aus einem Metall der Eisengruppe gemäß Anspruch 5 oder 6, worin eine Elektrodenflüssigkeit, die durch die Anodenkammer und/oder Kathodenkammer des Elektrodialysebades geleitet wird, zu der Anodenkammer des Elektroniederschlagsbad über einen Elektrodenflüssigkeitstank geführt wird und eine Anodenflüssigkeit, die von der Anodenkammer des Elektroniederschlagsbads abgelassen wird, durch die Anodenkammer und/oder die Kathodenkammer des Elektrodialysebades über den Elektrodenflüssigkeitstank geleitet wird.

8. Anlage zur Behandlung einer Flüssigkeit mit Ionen aus einem Metall der Eisengruppe, wobei die Anlage enthält:
eine Elektrodialysevorrichtung, enthaltend ein Elektrodialysebad (50), enthaltend eine Anodenkammer (51), die mit einer Anode versehen ist, eine Kathodenkammer (52), die mit einer Kathode versehen ist, und eine Vielzahl von Kationenaustauschmembranen, die zwischen der Anoden- und der Kathodenkammer angeordnet ist, eine Stromauferlegungseinheit, die eine Spannung zwischen der Anode und der Kathode des Elektrodialysebades (50) auferlegt, und eine Einheit, die eine Flüssigkeit mit Ionen eines Metalls der Eisengruppe und eine Elektroniederschlagslösung, die einen Liganden enthält, der einen Komplex mit den Ionen aus einem Metall der Eisengruppe bilden kann, durch das Elektrodialysebad leitet, wobei die Elektrodialysevorrichtung die Ionen eines Metalls der Eisengruppe von der Flüssigkeit mit Ionen aus einem Metall der Eisengruppe entfernt, indem verursacht wird, dass die Ionen eines Metalls der Eisengruppe, die in der Flüssigkeit mit Ionen aus einem Metall der Eisengruppe enthalten sind, durch die Kationenaustauschmembranen permeieren und in die Elektroniederschlagslösung migrieren,
eine Elektroniederschlagsanlage, die ein Elektroniederschlagsbad (60) enthält, enthaltend eine Anodenkammer, die mit einer Anode versehen ist, eine Kathodenkammer, die mit einer Kathode versehen ist, und eine Kationenaustauschmembran, die die Anodenkammer von der Kathodenkammer trennt, eine Stromauferlegungseinheit, die eine Spannung zwischen der Anode und der Kathode auferlegt, und eine Einheit, die eine Elektroniederschlagslösung, die von dem Elektrodialysebad abgelassen ist, wobei die Elektroniederschlagslösung die Ionen eines Metalls einer Eisengruppe enthält, durch die Kathodenkammer des Elektroniederschlagsbads leitet, wobei die Elektroniederschlagsanlage die Ionen aus einem Metall der Eisengruppe von der Elektroniederschlagslösung entfernt, indem verursacht wird, dass das Metall der Eisengruppe, das in der Elektroniederschlagslösung mit den Ionen aus einem Metall der Eisengruppe enthalten ist, auf der Kathode elektroniedergeschlagen wird, und
eine Einheit, die eine Elektroniederschlagslösung, von der Ionen eines Metalls der Eisengruppe entfernt sind, wobei die Elektroniederschlagslösung von dem Elektroniederschlagsbad abgelassen wird, zu dem Elektrodialysebad führt.

9. Anlage zur Behandlung einer Flüssigkeit mit Ionen aus einem Metall der Eisengruppe gemäß Anspruch 8, worin die Flüssigkeit mit Ionen aus einem Metall der Eisengruppe ein saurer Dekontaminations-Flüssigkeitsabfall mit einem pH von weniger als 5 ist, der durch eine Dekontaminationsbehandlung erzeugt wird, die in einer Nuklearenergieanlage durchgeführt wird, und worin der Flüssigkeitsabfall, von dem die Ionen aus einem Metall der Eisengruppe in der Elektrodialysevorrichtung entfernt sind, als Dekontaminationsflüssigkeit wiederverwendet wird.

10. Anlage zur Behandlung einer Flüssigkeit mit Ionen aus einem Metall der Eisengruppe gemäß Anspruch 8 oder 9, worin das Elektrodialysebad enthält:
eine Anode und eine Kathode,
eine erste bipolare Membran, die angeordnet ist, so dass sie der Anode gegenüberliegt,
eine zweite bipolare Membran, die angeordnet ist, so dass sie der Kathode gegenüberliegt,
eine Vielzahl von Kationenaustauschmembranen, die zwischen der ersten und der zweiten bipolaren Membran angeordnet ist, und
eine oder mehrere dritte bipolare Membranen, die jeweils zwischen einem spezifischen von benachbarten Paaren der Kationenaustauschmembranen angeordnet sind,
worin ein Raum zwischen der Anode und der ersten bipolaren Membran als Anodenkammer dient und ein Raum zwischen der Kathode und der zweiten bipolaren Membran als Kathodenkammer dient, und
worin ein Raum zwischen jeder der Kationenaustauschmembranen und einer spezifischen der bipolaren Membranen, die neben der Kationenaustauschmembran auf einer Seite der Kationenaustauschmembran angeordnet ist, auf der die Anode lokalisiert ist, als Deionisierungskammer dient, und ein Raum zwischen jeder der Kationenaustauschmembranen und einer spezifischen der bipolaren Membranen, die neben der Kationenaustauschmembran auf einer Seite der Kationenaustauschmembran angeordnet ist, auf der die Kathode lokalisiert ist, als Konzentrationskammer dient,
wobei die Anlage eine Einheit, die die Flüssigkeit mit Ionen aus einem Metall der Eisengruppe durch die Deionisierungskammer leitet, und
eine Einheit enthält, die die Elektroniederschlagslösung durch die Konzentrationskammer leitet.

11. Anlage zur Behandlung einer Flüssigkeit mit Ionen aus einem Metall der Eisengruppe gemäß Anspruch 8 oder 9, worin das Elektrodialysebad enthält:
eine Anode und eine Kathode,
eine erste Wasserstoff-permselektive Kationenaustauschmembran, die so angeordnet ist, dass sie der Anode gegenüberliegt,
eine zweite Wasserstoff-permselektive Kationenaustauschmembran, die so angeordnet ist, dass sie der Kathode gegenüberliegt,
eine Vielzahl von Kationenaustauschmembranen, die zwischen der ersten und der zweiten Wasserstoff-permselektiven Kationenaustauschmembran angeordnet ist, und
eine oder mehrere dritte Wasserstoff-permselektive Kationenaustauschmembranen, die jeweils zwischen einem spezifischen von benachbarten Paaren der Kationenaustauschmembranen angeordnet sind,
worin ein Raum zwischen der Anode und der ersten Wasserstoff-permselektiven Kationenaustauschmembran als Anodenkammer dient und ein Raum zwischen der Kathode und der zweiten Wasserstoff-permselektiven Kationenaustauschmembran als Kathodenkammer dient und
worin ein Raum zwischen jeder der Kationenaustauschmembranen und einer spezifischen der Wasserstoff-permselektiven Kationenaustauschmembranen, die neben der Kationenaustauschmembran auf einer Seite der Kationenaustauschmembran angeordnet ist, auf der die Anode lokalisiert ist, als Deionisationskammer dient, und ein Raum zwischen jeder der Kationenaustauschmembranen und einer spezifischen der Wasserstoff-permselektiven Kationenaustauschmembranen, die neben der Kationenaustauschmembran auf einer Seite der Kationenaustauschmembran angeordnet ist, auf der die Kathode lokalisiert ist, als Konzentrationskammer dient,
wobei die Anlage eine Einheit, die Flüssigkeit mit Ionen aus einem Metall der Eisengruppe durch die Deionisierungskammer leitet und
eine Einheit enthält, die die Elektroniederschlagslösung durch die Konzentrationskammer leitet.

12. Anlage zur Behandlung einer Flüssigkeit mit Ionen aus einem Metall der Eisengruppe gemäß einem der Ansprüche 8 bis 11, wobei die Anlage weiterhin einen Elektroniederschlags-Flüssigkeitstank, eine Einheit, die eine Elektroniederschlagsflüssigkeit, die von der Kathodenkammer des Elektroniederschlagsbads abgelassen ist, zu dem Elektroniederschlags-Flüssigkeitstank führt, eine Einheit, die die Elektroniederschlagsflüssigkeit, die in dem Elektroniederschlags-Flüssigkeitstank gespeichert ist, zu der Kathodenkammer des Elektroniederschlagsbades führt, eine Einheit, die eine Elektroniederschlagsflüssigkeit, die von der Konzentrationskammer des Elektrodialysebades abgelassen ist, zu dem Elektroniederschlags-Flüssigkeitstank führt und eine Einheit enthält, die die Elektroniederschlagsflüssigkeit, die in dem Elektroniederschlags-Flüssigkeitstank gelagert ist, zu der Konzentrationskammer des Elektrodialysebades führt.

13. Anlage zur Behandlung einer Flüssigkeit mit Ionen aus einem Metall der Eisengruppe gemäß einem der Ansprüche 8 bis 12, wobei die Anlage weiterhin einen Elektrodenflüssigkeitstank, eine Einheit, die eine Anodenflüssigkeit, die von der Anodenkammer des Elektroniederschlagsbades abgelassen ist, zu dem Elektrodenflüssigkeitstank führt, eine Einheit, die die Elektrodenflüssigkeit, die in der Elektrodenflüssigkeit gespeichert ist, zu der Anodenkammer des Elektroniederschlagsbades führt, eine Einheit, die eine Elektrodenflüssigkeit, die von der Anodenkammer und/oder Kathodenkammer des Elektrodialysebades abgelassen ist, zu dem Elektrodenflüssigkeitstank führt, und eine Einheit enthält, die die Elektrodenflüssigkeit, die in dem Elektrodenflüssigkeitstank gelagert ist, zu der Anodenkammer und/oder Kathodenkammer des Elektrodialysebades führt.

## Revendications

1. Procédé pour traiter un liquide contenant des ions d'un métal de groupe fer, le procédé comprenant : une étape d'électrodialyse dans laquelle un liquide contenant des ions d'un métal de groupe fer et un liquide de dépôt électrolytique contenant un ligand capable de former un complexe avec les ions d'un métal de groupe fer sont introduits dans un bain d'électrodialyse (1) incluant une pluralité de membranes d'échange de cations (5), et les ions d'un métal de groupe fer sont retirés du liquide contenant des ions d'un métal de groupe fer après que les ions d'un métal de groupe fer contenus dans le liquide contenant des ions d'un métal de groupe fer ont pénétré à travers la membrane d'échange de cations (5) et migré dans le liquide de dépôt électrolytique ;
une étape de dépôt électrolytique dans laquelle un liquide de dépôt électrolytique contenant les ions d'un métal de groupe fer, le liquide de dépôt électrolytique étant évacué du bain d'électrodialyse (50), est introduit dans un bain de dépôt électrolytique (60) incluant une anode et une cathode, et les ions d'un métal de groupe fer sont retirés du liquide de dépôt électrolytique à la suite du dépôt électrolytique des ions d'un métal de groupe fer contenus dans le liquide de dépôt électrolytique sur la cathode ; et
une étape de circulation de liquide de dépôt électrolytique dans laquelle un liquide de dépôt électrolytique duquel les ions d'un métal de groupe fer ont été retirés lors de l'étape de dépôt électrolytique est acheminé jusqu'à l'étape d'électrodialyse.

2. Procédé pour traiter un liquide contenant des ions d'un métal de groupe fer selon la revendication 1, dans lequel le liquide contenant des ions d'un métal de groupe fer est un déchet liquide de décontamination acide présentant un pH de moins de 5 qui est produit par un traitement de décontamination effectué dans une centrale nucléaire, et dans lequel le déchet liquide duquel les ions d'un métal de groupe fer ont été retirés lors de l'étape d'électrodialyse est réutilisé en tant que liquide de décontamination.

3. Procédé pour traiter un liquide contenant des ions d'un métal de groupe fer selon la revendication 1 ou 2, dans lequel le bain d'électrodialyse inclut
une anode et une cathode,
une première membrane bipolaire agencée pour faire face à l'anode,
une deuxième membrane bipolaire agencée pour faire face à la cathode,
une pluralité de membranes d'échange de cations interposées entre les première et deuxième membranes bipolaires, et
une ou plusieurs troisièmes membranes bipolaires interposées chacune entre une spécifique de paires adjacentes des membranes d'échange de cations,
dans lequel un espace entre l'anode et la première membrane bipolaire sert de chambre d'anode, et un espace entre la cathode et la deuxième membrane bipolaire sert de chambre de cathode,
dans lequel un espace entre chacune des membranes d'échange de cations et une spécifique des membranes bipolaires qui est adjacente à la membrane d'échange de cations sur un côté de la membrane d'échange de cations sur lequel est située l'anode sert de chambre de désionisation, et un espace entre chacune des membranes d'échange de cations et une spécifique des membranes bipolaires qui est adjacente à la membrane d'échange de cations sur un côté de la membrane d'échange de cations sur lequel est située la cathode sert de chambre de concentration, et
dans lequel le liquide contenant des ions d'un métal de groupe fer est passé à travers la chambre de désionisation, alors que le liquide de dépôt électrolytique est passé à travers la chambre de concentration.

4. Procédé pour traiter un liquide contenant des ions d'un métal de groupe fer selon la revendication 1 ou 2, dans lequel le bain d'électrodialyse inclut
une anode et une cathode,
une première membrane d'échange de cations à perméabilité sélective d'hydrogène agencée pour faire face à l'anode,
une deuxième membrane d'échange de cations à perméabilité sélective d'hydrogène agencée pour faire face à la cathode,
une pluralité de membranes d'échange de cations interposées entre les première et deuxième membranes d'échange de cations à perméabilité sélective d'hydrogène, et
une ou plusieurs troisièmes membranes d'échange de cations à perméabilité sélective d'hydrogène interposées chacune entre une spécifique de paires adjacentes des membranes d'échange de cations,
dans lequel un espace entre l'anode et la première membrane d'échange de cations à perméabilité sélective d'hydrogène sert de chambre d'anode, et un espace entre la cathode et la deuxième membrane d'échange de cations à perméabilité sélective d'hydrogène sert de chambre de cathode,
dans lequel un espace entre chacune des membranes d'échange de cations et une spécifique des membranes d'échange de cations à perméabilité sélective d'hydrogène qui est adjacente à la membrane d'échange de cations sur un côté de la membrane d'échange de cations sur lequel est située l'anode sert de chambre de désionisation, et un espace entre chacune des membranes d'échange de cations et une spécifique des membranes d'échange de cations à perméabilité sélective d'hydrogène qui est adjacente à la membrane d'échange de cations sur un côté de la membrane d'échange de cations sur lequel est située la cathode sert de chambre de concentration, et
dans lequel le liquide contenant des ions d'un métal de groupe fer est passé à travers la chambre de désionisation, alors que le liquide de dépôt électrolytique est passé à travers la chambre de concentration.

5. Procédé pour traiter un liquide contenant des ions d'un métal de groupe fer selon l'une quelconque des revendications 1 à 4, dans lequel le bain de dépôt électrolytique inclut
une chambre d'anode pourvue de l'anode, une chambre de cathode pourvue de la cathode, et une membrane d'échange de cations qui sépare la chambre d'anode de la chambre de cathode, et dans lequel un liquide de dépôt électrolytique contenant les ions d'un métal de groupe fer est passé à travers la chambre de cathode.

6. Procédé pour traiter un liquide contenant des ions d'un métal de groupe fer selon la revendication 5, dans lequel un liquide de dépôt électrolytique évacué de la chambre de cathode du bain de dépôt électrolytique est introduit dans le bain d'électrodialyse via une cuve de liquide de dépôt électrolytique, et un liquide de dépôt électrolytique contenant les ions d'un métal de groupe fer, le liquide de dépôt électrolytique étant évacué du bain d'électrodialyse, est acheminé jusqu'à la chambre de cathode du bain de dépôt électrolytique via la cuve de liquide de dépôt électrolytique.

7. Procédé pour traiter un liquide contenant des ions d'un métal de groupe fer selon la revendication 5 ou 6, dans lequel un liquide d'électrode passé à travers la chambre d'anode et/ou la chambre de cathode du bain d'électrodialyse est acheminé jusqu'à la chambre d'anode du bain de dépôt électrolytique via une cuve de liquide d'électrode, et un liquide d'anode évacué de la chambre d'anode du bain de dépôt électrolytique est passé à travers la chambre d'anode et/ou la chambre de cathode du bain d'électrodialyse via la cuve de liquide d'électrode.

8. Appareil pour traiter un liquide contenant des ions d'un métal de groupe fer, l'appareil comprenant :
un dispositif d'électrodialyse incluant un bain d'électrodialyse (50) incluant une chambre d'anode (51) pourvue d'une anode, une chambre de cathode (52) pourvue d'une cathode, et une pluralité de membranes d'échange de cations interposées entre les chambres d'anode et de cathode, une unité d'application de courant qui applique une tension entre l'anode et la cathode du bain d'électrodialyse (50), et une unité qui fait passer un liquide contenant des ions d'un métal de groupe fer et un liquide de dépôt électrolytique contenant un ligand capable de former un complexe avec les ions d'un métal de groupe fer à travers le bain d'électrodialyse, le dispositif d'électrodialyse retirant les ions d'un métal de groupe fer du liquide contenant des ions d'un métal de groupe fer en amenant les ions d'un métal de groupe fer contenus dans le liquide contenant des ions d'un métal de groupe fer à pénétrer à travers les membranes d'échange de cations et à migrer dans le liquide de dépôt électrolytique,
un appareil de dépôt électrolytique incluant un bain de dépôt électrolytique (60) incluant une chambre d'anode pourvue d'une anode, une chambre de cathode pourvue d'une cathode, et une membrane d'échange de cations qui sépare la chambre d'anode de la chambre de cathode, une unité d'application de courant qui applique une tension entre l'anode et la cathode, et une unité qui fait passer un liquide de dépôt électrolytique évacué du bain d'électrodialyse, le liquide de dépôt électrolytique contenant les ions d'un métal de groupe fer, à travers la chambre de cathode du bain de dépôt électrolytique, l'appareil de dépôt électrolytique retirant les ions d'un métal de groupe fer du liquide de dépôt électrolytique en amenant le métal de groupe fer contenu dans le liquide de dépôt électrolytique contenant les ions d'un métal de groupe fer à subir un dépôt électrolytique sur la cathode, et
une unité qui achemine un liquide de dépôt électrolytique duquel les ions d'un métal de groupe fer ont été retirés, le liquide de dépôt électrolytique étant évacué du bain de dépôt électrolytique, jusqu'au bain d'électrodialyse.

9. Appareil pour traiter un liquide contenant des ions d'un métal de groupe fer selon la revendication 8, dans lequel le liquide contenant des ions d'un métal de groupe fer est un déchet liquide de décontamination acide présentant un pH de moins de 5 qui est produit par un traitement de décontamination effectué dans une centrale nucléaire, et dans lequel le déchet liquide duquel les ions d'un métal de groupe fer ont été retirés dans le dispositif d'électrodialyse est réutilisé en tant que liquide de décontamination.

10. Appareil pour traiter un liquide contenant des ions d'un métal de groupe fer selon la revendication 8 ou 9, dans lequel le bain d'électrodialyse inclut
une anode et une cathode,
une première membrane bipolaire agencée pour faire face à l'anode,
une deuxième membrane bipolaire agencée pour faire face à la cathode,
une pluralité de membranes d'échange de cations interposées entre les première et deuxième membranes bipolaires, et
une ou plusieurs troisièmes membranes bipolaires interposées chacune entre une spécifique de paires adjacentes des membranes d'échange de cations,
dans lequel un espace entre l'anode et la première membrane bipolaire sert de chambre d'anode, et un espace entre la cathode et la deuxième membrane bipolaire sert de chambre de cathode, et
dans lequel un espace entre chacune des membranes d'échange de cations et une spécifique des membranes bipolaires qui est adjacente à la membrane d'échange de cations sur un côté de la membrane d'échange de cations sur lequel est située l'anode sert de chambre de désionisation, et un espace entre chacune des membranes d'échange de cations et une spécifique des membranes bipolaires qui est adjacente à la membrane d'échange de cations sur un côté de la membrane d'échange de cations sur lequel est située la cathode sert de chambre de concentration,
l'appareil comprenant une unité qui fait passer le liquide contenant des ions d'un métal de groupe fer à travers la chambre de désionisation, et
une unité qui fait passer le liquide de dépôt électrolytique à travers la chambre de concentration.

11. Appareil pour traiter un liquide contenant des ions d'un métal de groupe fer selon la revendication 8 ou 9, dans lequel le bain d'électrodialyse inclut
une anode et une cathode,
une première membrane d'échange de cations à perméabilité sélective d'hydrogène agencée pour faire face à l'anode,
une deuxième membrane d'échange de cations à perméabilité sélective d'hydrogène agencée pour faire face à la cathode,
une pluralité de membranes d'échange de cations interposées entre les première et deuxième membranes d'échange de cations à perméabilité sélective d'hydrogène, et
une ou plusieurs troisièmes membranes d'échange de cations à perméabilité sélective d'hydrogène interposées chacune entre une spécifique de paires adjacentes des membranes d'échange de cations,
dans lequel un espace entre l'anode et la première membrane d'échange de cations à perméabilité sélective d'hydrogène sert de chambre d'anode, et un espace entre la cathode et la deuxième membrane d'échange de cations à perméabilité sélective d'hydrogène sert de chambre de cathode, et
dans lequel un espace entre chacune des membranes d'échange de cations et une spécifique des membranes d'échange de cations à perméabilité sélective d'hydrogène qui est adjacente à la membrane d'échange de cations sur un côté de la membrane d'échange de cations sur lequel est située l'anode sert de chambre de désionisation, et un espace entre chacune des membranes d'échange de cations et une spécifique des membranes d'échange de cations à perméabilité sélective d'hydrogène qui est adjacente à la membrane d'échange de cations sur un côté de la membrane d'échange de cations sur lequel est située la cathode sert de chambre de concentration,
l'appareil comprenant une unité qui fait passer le liquide contenant des ions d'un métal de groupe fer à travers la chambre de désionisation, et
une unité qui fait passer le liquide de dépôt électrolytique à travers la chambre de concentration.

12. Appareil pour traiter un liquide contenant des ions d'un métal de groupe fer selon l'une quelconque des revendications 8 à 11, l'appareil comprenant en outre une cuve de liquide de dépôt électrolytique, une unité qui introduit un liquide de dépôt électrolytique évacué de la chambre de cathode du bain de dépôt électrolytique dans la cuve de liquide de dépôt électrolytique, une unité qui introduit le liquide de dépôt électrolytique stocké dans la cuve de liquide de dépôt électrolytique dans la chambre de cathode du bain de dépôt électrolytique, une unité qui introduit un liquide de dépôt électrolytique évacué de la chambre de concentration du bain d'électrodialyse dans la cuve de liquide de dépôt électrolytique, et une unité qui introduit le liquide de dépôt électrolytique stocké dans la cuve de liquide de dépôt électrolytique dans la chambre de concentration du bain d'électrodialyse.

13. Appareil pour traiter un liquide contenant des ions d'un métal de groupe fer selon l'une quelconque des revendications 8 à 12, l'appareil comprenant en outre une cuve de liquide d'électrode, une unité qui introduit un liquide d'anode évacué de la chambre d'anode du bain de dépôt électrolytique dans la cuve de liquide d'électrode, une unité qui introduit le liquide d'électrode stocké dans le liquide d'électrode dans la chambre d'anode du bain de dépôt électrolytique, une unité qui introduit un liquide d'électrode évacué de la chambre d'anode et/ou chambre de cathode du bain d'électrodialyse dans la cuve de liquide d'électrode, et une unité qui introduit le liquide d'électrode stocké dans la cuve de liquide d'électrode dans la chambre d'anode et/ou chambre de cathode du bain d'électrodialyse.
